# EUROPEAN PATENT SPECIFICATION

(11) **EP 4 281 276 B1**
(45) Date of publication and mention of the grant of the patent: **15.01.2025**
(21) Application number: 22817103.9
(22) Date of filing: 03.11.2022
(51) Int. Cl.: B29C 65/18, B29C 65/00

(54) **TRANSVERSE SEALING DEVICE, METHOD FOR OPERATING THE TRANSVERSE SEALING DEVICE AND VERTICAL FORM FILL SEALING MACHINE**
QUERSIEGELVORRICHTUNG, VERFAHREN ZUM BETREIBEN DER QUERSIEGELVORRICHTUNG UND VERTIKALE FORM-FÜLLSIEGELMASCHINE
DISPOSITIF DE SCELLAGE TRANSVERSAL, PROCÉDÉ DE FONCTIONNEMENT DU DISPOSITIF DE SCELLAGE TRANSVERSAL ET MACHINE VERTICALE DE FORMATION, DE REMPLISSAGE ET DE SCELLAGE

(30) Priority: 05.11.2021 DE 102021128877
(43) Date of publication of application: 29.11.2023
(73) Proprietor: Syntegon Packaging Solutions B.V., 6001 SE Weert (NL)
(72) Inventor: HENNISSEN, Maurice, 6001 SE Weert (NL); CASTERMANS, Marc, 6001 SE Weert (NL); KOK, Tom, 6001 SE Weert (NL)
(74) Representative: Novagraaf Group
(86) International application number: PCT/EP2022/080626
(87) International publication number: WO 2023/078971

(56) References cited:
- EP-A1- 2 103 526
- AT-A2- 502 740
- US-A- 3 616 087
- US-A- 4 751 808

## Description

### State of the art

A transverse sealing device for sealing a package or a packaging material, comprising at least two sealing jaws, comprising at least one movement unit, which is configured for moving the at least two sealing jaws horizontally relative to each other, and comprising a guide unit for guiding the at least two sealing jaws during a movement, has already been proposed.

DE 697 25 928 T2 discloses a transverse sealing device for sealing a package or a packaging material.

Further EP 2 103 526 A1, US 3 616 087 A, AT 502740 A2and US 4 751 808 A disclose transverse sealing devices for sealing a package or a packaging material. The transverse sealing devices comprise each at least two sealing jaws , at least one movement unit, which is configured for moving the at least two sealing jaws horizontally relative to each other, and a guide unit to guide the at least two sealing jaws during a movement, wherein the movement unit is arranged at least substantially completely sideways relative to two sealing jaws, at least viewed in a direction parallel to a horizontal movement axis of the guide unit, wherein the at least two sealing jaws are linearly movably supported along the direction parallel to the horizontal movement axis of the guide unit. In EP 2 103 526 A1 and AT 502740 A2, the at least two sealing jaws are pushable into a sealing position by means of the movement unit. In US 3 616 087 A and US 4 751 808 A, one of the at least two sealing jaws is pushable into a sealing position, since the other of the at least two sealing jaws is pullable into a sealing position by means of the movement unit.

### Disclosure of the invention

The invention is based on a transverse sealing device for sealing a package or a packaging material, comprising at least two sealing jaws, comprising at least one movement unit, which is configured for moving the at least two sealing jaws horizontally relative to each other and comprising a guide unit to guide the at least two sealing jaws during a movement, wherein the movement unit is arranged at least substantially completely sideways relative to the at least two sealing jaws, at least viewed in a direction parallel to a horizontal movement axis of the guide unit, wherein at least 75% of a total volume and/or a total mass of the movement unit are arranged sideways relative to the at least two sealing jaws, wherein the at least two sealing jaws are linearly movably supported along the direction parallel to the horizontal movement axis of the guide unit.

It is proposed that the at least two sealing jaws are pullable into a sealing position by means of the movement unit, wherein the movement unit is connected to the at least two sealing jaws in such a way that the movement unit is enabled to generate a direct pulling force for pulling the at least two sealing jaws, relative to each other, into the sealing position, wherein at least one movement element and at least one further movement element of the movement unit are movable relative to each other so as to pull the at least two sealing jaws towards each other into the sealing position. By the fact that an object is arranged "at least substantially completely sideways relative to a further object" is here to be understood that at least 75% and particularly preferably at least 90% of a total volume and/or a total mass of the object are arranged sideways relative to the further object. Preferably, in at least one operation state of the movement unit, the movement unit is arranged completely sideways relative to the at least two sealing jaws, at least viewed in the direction parallel to the horizontal movement axis. The transverse sealing device preferably comprises at least one drive unit for driving the movement unit so as to generate a horizontal movement of the at least two sealing jaws. Preferably, the transverse sealing device comprises at least one further drive unit to provide a driving force for generating the vertical movement of the at least two sealing jaws, in particular relative to a frame of the transverse sealing device. In particular, the further drive unit comprises a lifting fork, a transmission belt, a gear wheel, or the like for transmitting a driving force of the at least one further drive unit to the at least two sealing jaws in order to generate a vertical movement of the at least two sealing jaws. Exemplarily, the further drive unit comprises at least the transmission belt and the lifting fork for transmitting the drive force of the at least one further drive unit to the at least two sealing jaws in order to generate a vertical movement of the at least two sealing jaws. In particular, the lifting fork is directly attached to at least one of the at least two sealing jaws. It is also conceivable that the further drive unit is at least partially implemented integrally with at least one of the at least two sealing jaws. By "at least one unit and at least one further unit/at least one element being at least partially implemented integrally" is here in particular to be understood that at least one element of the unit is implemented integrally with a further element of the further unit/the element. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. Alternatively, it is also conceivable, for example, that the further drive unit comprises the transmission belt, which is directly connected to at least one of the at least two sealing jaws. Furthermore, it is alternatively also conceivable that the further drive unit is configured for driving the movement unit to generate the vertical movement of the at least two sealing jaws, in particular relative to the frame. Exemplarily, the drive unit and/or the further drive unit are/is implemented as an electromotor, as a pneumatic motor or as another drive unit that appears reasonable to a person skilled in the art. Alternatively, it is also conceivable that the drive unit is configured for driving the movement unit so as to generate the horizontal movement and the vertical movement of the at least two sealing jaws. Preferably, the movement unit is different from the drive unit and/or the further drive unit. Particularly preferably, the movement unit is embodied differently from the guide unit of the transverse sealing device, in particular at least embodied differently from non-movable guide elements of the transverse sealing device relative to the frame, in particular of the guide unit. The at least two sealing jaws are preferably supported movably, in particular linearly movably, along the direction parallel to a vertical movement axis of the guide unit.

Preferably the at least two sealing jaws are configured to seal a packaging material, which is in particular arrangeable between the at least two sealing jaws. Each of the at least two sealing jaws has a sealing surface. Preferably, the sealing surfaces of the at least two sealing jaws are arranged facing each other. The sealing surfaces of the at least two sealing jaws are preferably in contact with the packaging material in the sealing position in order to create a sealing in the packaging material. In particular, the sealing surfaces of the at least two sealing jaws run at least substantially parallel to each other. Preferably, the horizontal movement axis of the guide unit runs at least substantially perpendicularly to the sealing surfaces of the at least two sealing jaws. The term "substantially perpendicularly" is here in particular to mean an orientation of a direction relative to a reference direction, wherein the direction and the reference direction, in particular viewed in a projection plane, include a 90°-angle and the angle has a maximum deviation of in particular less than 8°, advantageously less than 5° and especially advantageously less than 2°. The sealing surfaces of the at least two sealing jaws preferably run at least substantially perpendicularly to the horizontal movement axis of the guide unit. The movement unit is preferably configured to convert a power, which is generatable by the drive unit and/or the further drive unit and acts onto the at least two sealing jaws, into a horizontal movement of the at least two sealing jaws relative to each other and/or into a vertical movement of the at least two sealing jaws, in particular relative to the frame of the transverse sealing device. The vertical movement axis preferably extends at least substantially parallel to the sealing surfaces of the at least two sealing jaws and/or at least substantially perpendicularly to the horizontal movement axis. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°.

The movement unit comprises at least one movement element, which is movably connected to at least one of the at least two sealing jaws. Exemplarily, the at least one movement element is implemented as a beam, an arm, a bearing element, in particular a torque resistant linear bushing, a gear wheel, or the like. It is also conceivable that the movement unit, in particular at least one movement element of the movement unit, and the at least two sealing jaws overlap with each other at least partially in at least one operation state of the at least two sealing jaws, at least viewed in a direction perpendicular to the horizontal movement axis of the guide unit. In particular, a region behind and in front of the at least two sealing jaws is at least substantially completely free from the movement unit, at least viewed in the direction parallel to the horizontal movement axis of the guide unit.

The at least two sealing jaws are preferably movably connected to the frame, in particular via the guide unit. The transverse sealing device preferably comprises the guide unit for guiding the at least two sealing jaws during a movement of the at least two sealing jaws, in particular relative to the frame. In particular, the guide unit comprises at least one guide element for guiding the at least two sealing jaws during the vertical movement, in particular relative to the frame of the transverse sealing device. In particular, a main extension axis of the at least one guide element of the guide unit is at least substantially perpendicular to the horizontal movement axis of the guide unit. By a "main extension axis" of an object is herein in particular an axis to be understood which extends parallel to a longest edge of a smallest geometric rectangular cuboid that just still completely encloses the object. The main extension axis of the at least one guide element of the guide unit preferably is at least substantially parallel to the vertical movement axis of the guide unit. The at least one guide element is preferably arranged in a positionally fixed manner relative to the frame. In particular, the at least one guide element is arranged rotatably relative to the frame. The at least one guide element of the guide unit is exemplarily embodied as a guide rod or as another guide element that appears reasonable to a person skilled in the art. The transverse sealing device, in particular the guide unit, preferably comprises at least one further guide element for guiding the at least two sealing jaws during the horizontal movement of the at least two sealing jaws relative to each other. In particular, a main extension axis of the at least one further guide element of the guide unit is at least substantially parallel to the horizontal movement axis of the guide unit. The main extension axis of the at least one further guide element of the guide unit preferably is at least substantially perpendicular to the vertical movement axis of the guide unit. It is conceivable that the at least one guide element of the guide unit and the at least one further guide element of the guide unit are embodied identically or embodied differently from each other. The at least one further guide element is preferably arranged in a positionally fixed manner relative to the frame. In particular, the at least one further guide element is arranged in a rotationally fixed manner relative to the frame. In particular, the movement unit is arranged at least substantially completely sideways relative to the at least one further guide element.

It is advantageously possible to provide a compact transverse sealing device. Advantageously a maximum length of the transverse sealing device can be kept particularly small, at least viewed in the direction parallel to the horizontal movement axis of the guide unit. The arrangement of the movement unit relative to the at least two sealing jaws according to the invention enables a number of different, particularly advantageous drive units, which are configured for driving the movement unit so as to generate the horizontal of the at least two sealing jaws.

It is further proposed that the movement unit is arranged sideways relative to the at least two sealing jaws in such a way that the movement unit is positioned at least substantially completely within a proximity area of the at least two sealing jaws. By the fact that the movement unit is arranged "sideways relative to the at least two sealing jaws in such way that the movement unit is positioned at least substantially completely within the proximity area of the at least two sealing jaws" is here to be understood that the movement unit is arranged sideways relative to the at least two sealing jaws in such a way that at least 75% and particularly preferably at least 90% of a total volume and/or a total mass of the movement unit are arranged sideways relative to the at least two sealing jaws within the proximity area of the at least two sealing jaws. In particular, the proximity area of the at least two sealing jaws extends by up to 20 %, preferably by up to 10 % and particularly preferably by up to 5 % of a maximum movement range of the at least two sealing jaws, in the direction parallel to the horizontal movement axis beyond the at least two sealing jaws. Preferably, the proximity area of the at least two sealing jaws extends by up 20 %, preferably by up to 10 % and particularly preferably by up to 5 % of a maximum movement range of the at least two sealing jaws, along the direction parallel to the vertical movement axis beyond the at least two sealing jaws, in particular beyond the at least one guide element. Particularly preferably, the proximity area of the at least two sealing jaws extends by up 20 %, preferably by up to 10 % and particularly preferably by up to 5 % of a maximum extension of the at least two sealing jaws perpendicularly to the vertical movement axis and the horizontal movement axis, beyond the at least two sealing jaws. Advantageously a particularly compact transverse sealing device can be provided.

In particular, the at least two sealing jaws are movable, relative to each other, into the sealing position free from a direct pushing movement on the at least two sealing jaws by means of the movement unit. Preferably the at least two sealing jaws are pullable, relative to each other, into the sealing position along the direction parallel to the horizontal movement axis by means of the movement unit. Preferably the movement unit is connected to the at least two sealing jaws in such a way that the at least two sealing jaws are moved, in particular pulled, relative to each other in a synchronous movement. Alternatively, it is also conceivable that the movement unit is connected to the at least two sealing jaws in such a way, that the at least two sealing jaws are moved, in particular pulled, relative to each other in an asynchronous movement.

Preferably the movement unit comprises the at least one movement element and at least one further movement element. It is conceivable that the movement element and the further movement element are implemented identically to or differently from each other. The at least one movement element is in particular directly, preferably movably, connected to one sealing jaw of the at least two sealing jaws. The at least one further movement element is in particular directly, preferably movably, connected to a further sealing jaw of the at least two sealing jaws. In particular, in at least one implementation the at least one movement element and the at least one further movement element are movable relative to each other, wherein preferably a movement of the at least two sealing jaws relative to each other is generatable by a relative movement of the at least one movement element and the at least one further movement element. In particular, the at least two sealing jaws are pushable or pullable by a relative movement of the at least one movement element and the at least one further movement element. Preferably the at least one movement element and the at least one further movement element are movable relative to each other so as to pull the at least two sealing jaws towards each other into the sealing position. Preferably the movement of the at least one movement element and the at least one further movement element relative to each other so as to move the at least two sealing jaws relative to each other, in particular into the sealing position, is generatable by a rotating movement of the movement unit, in particular by a rotation of at least one additional movement element of the movement unit. Alternatively, it is also conceivable that the at least one movement element and the at least one further movement element are movable relative to each other so as to move the at least two sealing jaws relative to each other by a pushing and/or pulling movement of the movement unit, in particular by a pushing and/or pulling movement of the additional movement element of the movement unit. The additional movement element is exemplarily implemented identically to or differently from the at least one movement element and/or the at least one further movement element. Exemplarily, the at least one further movement element is implemented as a beam, an arm, a bearing element, in particular a torque resistant linear bushing, a gear wheel, or the like. Advantageously, a particularly compact movement mechanism can be implemented for moving the at least two sealing jaws into a sealing position.

It is also proposed that the movement unit comprises at least one torque resistant linear bushing and at least one, in particular the already aforementioned, movement element, in particular a mechanical connection element, which is movably connected to one sealing jaw of the at least two sealing jaws and to the at least one torque resistant linear bushing, wherein the torque resistant linear bushing is configured to transmit a drive torque, in particular from an, in particular the already aforementioned, drive unit to the at least one movement element for the purpose of moving the at least two sealing jaws relative to each other in the direction parallel to the horizontal movement axis of the guide unit. Preferably the aforementioned additional movement element is embodied as the torque resistant linear bushing. In particular, the at least one further movement element is movably connected to the torque resistant linear bushing. The at least one movement element and/or the at least one further movement element are/is rotatably attached to the torque resistant linear bushing. Preferably the torque resistant linear bushing, the movement element and the further movement element constitute a crank slider mechanism. The crank slider mechanism is preferably configured to convert a driving force generatable by the drive unit into the horizontal movement of the at least two sealing jaws. Advantageously a particularly compact movement mechanism can be realized for moving the at least two sealing jaws into a sealing position.

Furthermore, it is proposed that the guide unit comprises at least one, in particular the already aforementioned, guide element, in particular a guide rod, to which the torque resistant linear bushing is movably connected, and comprises at least one, in particular the already aforementioned, drive unit, which is configured for driving the at least one guide element of the guide unit so as to rotate around a rotation axis of the at least one guide element of the guide unit in order to generate a horizontal movement of the two sealing jaws relative to each other. Preferably the torque resistant linear bushing is arranged so as to be linearly movable along the at least one guide element of the guide unit. In particular, the torque resistant linear bushing is connected non-rotatably to the at least one guide element of the guide unit, preferably by a longitudinally slotted shaft of the at least one guide element, or the like. The at least one guide element of the guide unit is preferably arranged at least substantially completely sideways relative to the at least two sealing jaws, at least viewed in a direction parallel to the horizontal movement axis of the guide unit. In particular, the main extension axis of the at least one guide element is equivalent to the rotation axis of the at least one guide element of the guide unit. A drive force of the drive unit is preferably transmittable to the movement unit, in particular to the at least one guide element of the guide unit, by means of a transmission belt, a gear wheel, or the like, of the drive unit. The guide element of the guide unit preferably constitutes one further additional element of the movement unit. In particular, the guide element of the guide unit is rotatably connected to the frame of the transverse sealing device. Advantageously it is possible to realize a compact movement unit for moving the at least two sealing jaws relative to each other. Advantageously it is possible to realize a drive unit which is arranged statically on a frame of the transverse sealing device.

Beyond this it is proposed that the movement unit comprises at least two torque resistant linear bushings, which are configured to transmit a driving force, in particular from at least one, in particular the already aforementioned, drive unit, for moving the at least two sealing jaws relative to each other in the direction parallel to the horizontal movement axis, wherein on each side of the at least two sealing jaws one of the two torque resistant linear bushings is arranged, at least viewed in the direction parallel to the horizontal movement axis of the guide unit. Alternatively, it is conceivable that the further torque resistant linear bushing is constructed differently from the at least one torque resistant linear bushing. The at least two torque resistant linear bushings are preferably arranged on sides of the at least two sealing jaws which face away from each other, at least viewed in a direction perpendicular to the horizontal movement axis and to the vertical movement axis of the guide unit. Preferably, the at least one further torque resistant linear bushing is connected to the at least two sealing jaws analogously to the connection of the at least one torque resistant linear bushing. A transverse sealing device with a particularly advantageous dynamic behavior can be realized. In particular, in a preferred implementation, the movement unit is implemented of the two torque resistant linear bushings, two guide elements of the guide unit, one of the two guide elements of the guide unit being preferably embodied by the already aforementioned guide element of the guide unit, and four movement elements, two of the four movement elements being embodied by the already aforementioned movement element and the already aforementioned further movement element. Alternatively, it is also conceivable that the movement unit comprises and is implemented of merely one, in particular the already aforementioned, torque resistant linear bushing, one, in particular the already aforementioned, guide element of the guide unit and two movement elements, in particular the already aforementioned movement element and the already aforementioned further movement element. Furthermore, it is alternatively also conceivable that the movement unit is implemented differently, in particular in a manner that appears reasonable to a person skilled in the art. Advantageously a particularly even sealing can be achieved.

It is further proposed that the guide unit comprises at least one, in particular the already aforementioned, guide element, in particular a guide rod, wherein the movement unit comprises at least one, in particular the already aforementioned, torque resistant linear bushing, which can be moved along the at least one guide element of the guide unit of the guide unit for a vertical movement of the at least two sealing jaws. The vertical movement of the at least two sealing jaws is preferably directly linked with a vertical movement of the torque resistant linear bushing. Advantageously a particularly compact transverse sealing device can be provided. The guide element of the guide unit can advantageously be used both to generate a rotation of the torque resistant linear bushing to generate a horizontal movement of the at least two sealing jaws and to guide a vertical movement of the at least two sealing jaws by means of the torque resistant linear bushing. Advantageously a particularly compact movement mechanism for moving the at least two sealing jaws horizontally and vertically can be realized. The guide element can advantageously be used both for transmitting a rotational movement to generate a horizontal movement and to guide a vertical movement of the torque resistant linear bushing for a vertical movement of the at least two sealing jaws.

It is moreover proposed that the transverse sealing device comprises an, in particular the already aforementioned, frame and at least one, in particular the already aforementioned further, drive unit to provide a driving force for generating a vertical movement of the at least two sealing jaws relative to the frame, wherein the, in particular further, drive unit, which is configured to provide a driving force for generating the vertical movement of the at least two sealing jaws, is arranged in an at least substantially positionally fixed manner relative to the frame. According to the invention, a drive unit being "arranged in an at least substantially positionally fixed manner" means free from any movement relative to the frame other than a movement of mechanical components of the drive unit which inevitably move during operation of the drive unit. It is conceivable that the further drive unit is arranged at least substantially completely sideways relative to the at least two sealing jaws, at least viewed in the direction parallel to the horizontal movement axis of the guide unit. It is also conceivable that the further drive unit is arranged at least partially, in particular at least substantially completely, in front of or behind the at least two sealing jaws, at least viewed in the direction parallel to the horizontal movement axis of the guide unit. By the fact that an object is arranged "at least substantially completely in front of or behind a further object, at least viewed in a certain direction," is here in particular to be understood that at least 75% and particularly preferably at least 90% of a total volume and/or a total mass of the object are arranged in front of or behind the further object, at least viewed in the certain direction. A transverse sealing device with a particularly advantageous dynamic behavior can be made available. A drive unit, which is configured for driving the movement unit so as to generate a vertical movement of the at least two sealing jaws, can be positioned in a particularly flexible manner and/or positioned in such a way that a particularly compact transverse sealing device can be realized.

Beyond this it is proposed that the transverse sealing device comprises an, in particular the already aforementioned, frame and at least one, in particular the already aforementioned, drive unit for driving the movement unit so as to generate a horizontal movement of the at least two sealing jaws relative to each other in the direction parallel to the horizontal movement axis by means of the movement unit, wherein the drive unit, which is for driving the movement unit so as to generate the horizontal movement of the at least two sealing jaws, is arranged in an at least substantially positionally fixed manner relative to the frame. It is conceivable that the drive unit is arranged at least substantially completely sideways relative to the at least two sealing jaws, at least viewed in the direction parallel to the horizontal movement axis of the guide unit. It is also conceivable that the drive unit is arranged at least partially, preferably at least substantially completely, in front of or behind the at least two sealing jaws, at least viewed in the direction parallel to the horizontal movement axis of the guide unit. A transverse sealing device with a particularly advantageous dynamic behavior can be made available. A drive unit for driving the movement unit so as to generate a horizontal movement of the at least two sealing jaws can advantageously be positioned in a particularly flexible manner and/or positioned in such a way that a particularly compact transverse sealing device can be realized. Advantageously the mass of the drive unit does not have to be borne by the further drive unit during a vertical movement of the at least two sealing jaws.

The invention is furthermore based on a method for operating a transverse sealing device for sealing a package or a packaging material, in particular a transverse sealing device according to the invention. It is proposed that in one process step two sealing jaws, in particular the already aforementioned at least two sealing jaws, of the transverse sealing device are pulled into a sealing position by means of a movement unit, in particular the already aforementioned movement unit, of the transverse sealing device, wherein the movement unit is connected to the at least two sealing jaws in such a way that the movement unit generates a direct pulling force which pulled the at least two sealing jaws relative to each other into the sealing position, wherein the at least two sealing jaws are linearly moved along the direction parallel to the horizontal movement axis of the guide unit. Preferably in one process step the at least one movement element and the at least one further movement element of the movement unit are moved relative to each other by the drive unit for the purpose of generating a pulling force to pull the at least two sealing jaws towards each other into the sealing position. Advantageously a particularly space-saving method for moving the at least two sealing jaws can be provided.

It is moreover proposed that in one process step a drive torque for moving the at least two sealing jaws relative to each other along an, in particular the already aforementioned, direction parallel to an, in particular the already aforementioned, horizontal movement axis of an, in particular the already aforementioned, guide unit of the transverse sealing device is transmitted by at least one, in particular the already aforementioned, torque resistant linear bushing of the movement unit. In particular, in one process step the drive unit drives the guide element of the guide unit to rotate around the rotation axis to generate a rotation of the at least one torque resistant linear bushing. In one process step the rotational force of the torque resistant linear bushing is converted into a relative movement of the at least one movement element and the at least one further movement element for the purpose of generating a pulling or pushing force to move the at least two sealing jaws relative to each other along the direction parallel to the horizontal movement axis of the guide unit. Advantageously the two sealing jaws can be moved in a particularly advantageous dynamic manner.

Furthermore, a vertical form fill sealing machine is proposed, comprising a machine frame and at least one transverse sealing device for sealing a packaging material according to the invention. The vertical form fill sealing machine comprises preferably at least one supply station having at least one component configured for holding a roll of packaging material. In particular, the vertical form fill sealing machine comprises a form shoulder or the like for transforming the packaging material into a tube. Preferably the form fill sealing machine comprises a longitudinal sealing device for sealing the packaging material longitudinally. In particular the form fill sealing machine comprises at least one filling station for a filling of the packaging material with a material. The filling station, the supply station, the transverse sealing device and/or the longitudinal sealing device are/is in particular attached to the machine frame of the vertical form fill sealing machine. The drive unit and/or the further drive unit of the transverse sealing device are/is preferably arranged relative to the machine frame in at least substantially positionally fixed manner. Advantageously a form fill sealing machine with a particularly compact transverse sealing device can be provided.

The transverse sealing device according to the invention, the method according to the invention and/or the vertical form fill sealing machine according to the invention shall herein not be limited to the application and implementation described above. In particular, in order to fulfill a functionality that is described here, the transverse sealing device according to the invention, the method according to the invention and/or the vertical form fill sealing machine according to the invention may comprise a number of individual elements, components and units as well as method steps that differs from a number given here. Moreover, concerning the value ranges given in the present disclosure, values within the limits mentioned shall also be considered to be disclosed and to be usable as applicable.

### Drawing

Further advantages will become apparent from the following description of the drawing. In the drawing seven exemplary embodiments of the invention are illustrated. The drawing, the description and the claims contain a plurality of features in combination. Someone skilled in the art will purposefully also consider the features individually and will find further expedient combinations.

It is shown in:
- Fig. 1: A section of a vertical form fill sealing machine according to the invention with a transverse sealing device according to the invention, in a schematic representation,
- Fig. 2: A section of the vertical form fill sealing machine according to the invention, in another schematic representation,
- Fig. 3: the transverse sealing device according to the invention, in a detailed schematic representation,
- Fig. 4: a schematic flow chart of a method for operating the form fill sealing machine according to the invention,
- Fig. 5: a schematic flow chart of a method for operating the transverse sealing device according to the invention,
- Fig. 6: a transverse sealing device according to the invention in a first alternative embodiment,
- Fig. 7: a transverse sealing device according to the invention in a second alternative embodiment,
- Fig. 8: a schematic flow chart of a method for operating the transverse sealing device according to the invention in the second alternative embodiment,
- Fig. 9a: a movement diagram for a vertical movement of at least two sealing jaws of the transverse sealing device according to the invention in the second alternative embodiment,
- Fig. 9b: a movement diagram for a horizontal movement of the at least two sealing jaws of the transverse sealing device according to the invention in the second alternative embodiment,
- Fig. 10: a transverse sealing device according to the invention in a third alternative embodiment,
- Fig. 11: a transverse sealing device according to the invention in a fourth alternative embodiment,
- Fig. 12: a transverse sealing device according to the invention in a fifth alternative embodiment, and
- Fig. 13: a transverse sealing device in a sixth alternative embodiment.

### Description of the exemplary embodiments

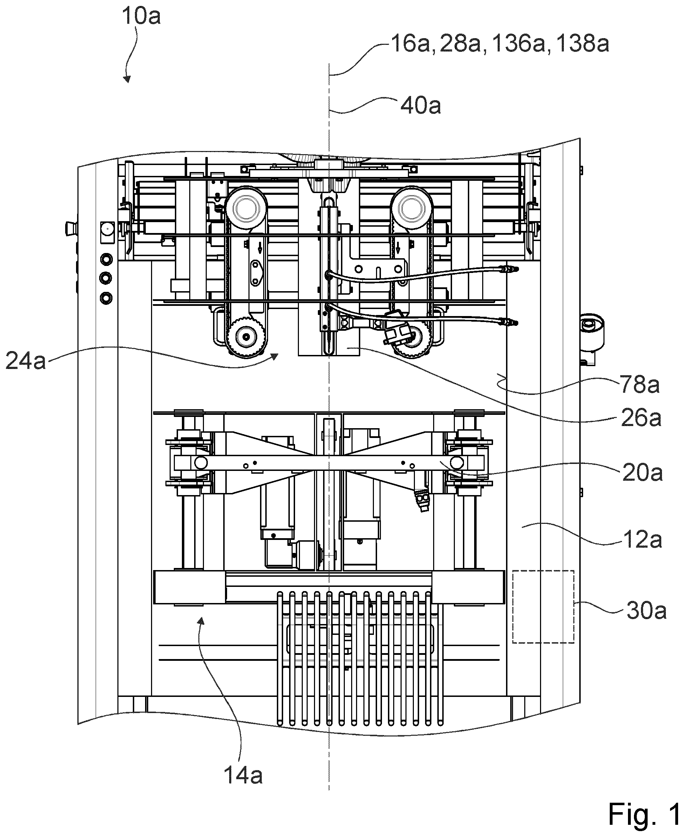

In figure 1 a vertical form fill sealing machine 10a is shown. The vertical form fill sealing machine 10a comprises a machine frame 12a. The vertical form fill sealing machine 10a comprises at least one transverse sealing device 14a for a transverse sealing of a packaging material. The vertical form fill sealing machine 10a comprises at least one supply station (not shown here) having components configured for holding a roll of packaging material. The vertical form fill sealing machine comprises a form shoulder (not shown here) for transforming the packaging material into a tube. The vertical form fill sealing machine comprises a longitudinal sealing device (not shown here) for a longitudinal sealing of the packaging material. The vertical form fill sealing machine 10a comprises a filling station 24a. The filling station 24a comprises at least one filling tube 26a that is configured to fill a package with content. The filing station 24a, the supply station, the transverse sealing device 14a and/or the longitudinal sealing device are attached to the machine frame 12a of the vertical form fill sealing machine 10a.

The transverse sealing device 14a is mounted on the machine frame 12a so that it can be rotated around a rotation axis 16a of the transverse sealing device 14a at least substantially as a whole. At least substantially all components of the transverse sealing device 14a are simultaneously rotatable around the rotation axis 16a of the transverse sealing device 14a, in particular relative to the machine frame 12a. The transverse sealing device 14a comprises a frame 70a. All components of the transverse sealing device 14a other than the frame 70a are mounted on the frame 70a of the transverse sealing device 14a. The frame 70a of the transverse sealing device 14a is arranged movably, preferably rotatably, on the machine frame 12a.

The transverse sealing device 14a is mounted movably, in particular rotatably, on the machine frame 12a in such a way that the rotation axis 16a of the transverse sealing device 14a is positionally fixed relative to the machine frame 12a, in particular independently from any operational movements of the transverse sealing device 14a relative to the machine frame 12a. The transverse sealing device 14a is mounted on the machine frame 12a in such a way that the transverse sealing device 14a is only movable at least substantially as a whole by a rotation of the transverse sealing device 14a substantially as a whole around the rotation axis 16a of the transverse sealing device 14a. A rotation of the transverse sealing device 14a substantially as a whole relative to the machine frame 12a is generatable free from any translational movements of the transverse sealing device 14a at least substantially as a whole, in particular relative to the machine frame 12a. The transverse sealing device 14a is mounted on the machine frame 12a in such a way that the transverse sealing device 14a, substantially as a whole, has only one degree of freedom to move. Alternatively, it is also conceivable that the transverse sealing device 14a is mounted on the machine frame 12a in such a way that the transverse sealing device 14a can be moved translationally, in particular along a direction parallel to a translational movement axis of a guide unit 82a of the transverse sealing device 14a, in particular relative to the machine frame 12a. The rotation axis 16a of the transverse sealing device 14a runs at least substantially perpendicularly to a support surface of the machine frame 12a. The support surface of the machine frame 12a is configured to transmit weight forces of the vertical form fill sealing machine 10a, in particular the machine frame 12a, to a floor, on which the vertical form fill sealing machine 10a is arranged. The support surface of the machine frame 12a is in particular part of a stand of the machine frame 12a, of a bottom surface of the machine frame 12a or the like.

The transverse sealing device 14a is positionable in at least two work positions for a transverse sealing of a packaging material by means of a stepless rotation of the transverse sealing device 14a relative to the machine frame 12a around the rotation axis 16a. Preferably the stepless rotation of the transverse sealing device 14a, at least substantially as a whole, relative to the machine frame 12a around the rotation axis 16a is a pure rotation, particularly preferably free from any translational movements of the transverse sealing device 14a relative to the machine frame 12a, in particular from one work position of the at least two work positions to a further work position of the at least two work positions. The transverse sealing device 14a is mounted on the machine frame 12a in such a way that the transverse sealing device 14a can be positioned in at least two work positions for a transverse sealing of a packaging material free of any translational movement of the transverse sealing device 14a at least substantially as a whole, in particular relative to the machine frame 12a. The transverse sealing device 14a is positionable in the at least two work positions for a transverse sealing of a packaging material solely by means of the rotation of the transverse sealing device 14a, at least substantially as a whole, relative to the machine frame 12a, in particular free from any additional, especially linearly guided, movements of the transverse sealing device 14a at least substantially as a whole relative to the machine frame 12a. The at least two work positions of the transverse sealing device 14a differ in a rotational position of the transverse sealing device 14a, in particular at least substantially as a whole, relative to the machine frame 12a. The at least two work positions of the transverse sealing device 14a differ from each other by an angle of 90°. Alternatively, it is also conceivable that the at least two work positions of the transverse sealing device 14a differ from each other by an angle different from 90°, preferably by an angle greater than 0° and less than 360°. It is also conceivable that the transverse sealing device 14a can be rotated over 360°, in particular by an integer or a non-integer multiple of 360°, relative to the machine frame 12a. It is conceivable that energy supply lines of the vertical form fill sealing machine 10a for supplying the transverse sealing device 14a with energy are implemented and/or arranged relative to the machine frame 12a and/or the transverse sealing device 14a such as to enable a 360° rotation, preferably a rotation over 360°, in particular a rotation by an integer or a non-integer multiple of 360°, of the transverse sealing device 14a relative to the machine frame 12a. Exemplarily the energy supply lines are arranged in combination with a slip ring, a rotary transformer or the like of the vertical form fill sealing machine 10a such as to enable a 360° rotation of the transverse sealing device 14a relative to the machine frame 12a. It is conceivable that the transverse sealing device 14a is infinitely rotatable at least substantially as a whole around the rotation axis 16a in a variety of different work positions for a transverse sealing of a packaging material. Alternatively, it is also conceivable that the transverse sealing device 14a is rotatable at least substantially as a whole around the rotation axis 16a of the transverse sealing device 14a into fixed, in particular spaced-apart, rotational positions of the transverse sealing device 14a relative to the machine frame 12a, which in particular constitute different work positions of the transverse sealing device 14a.

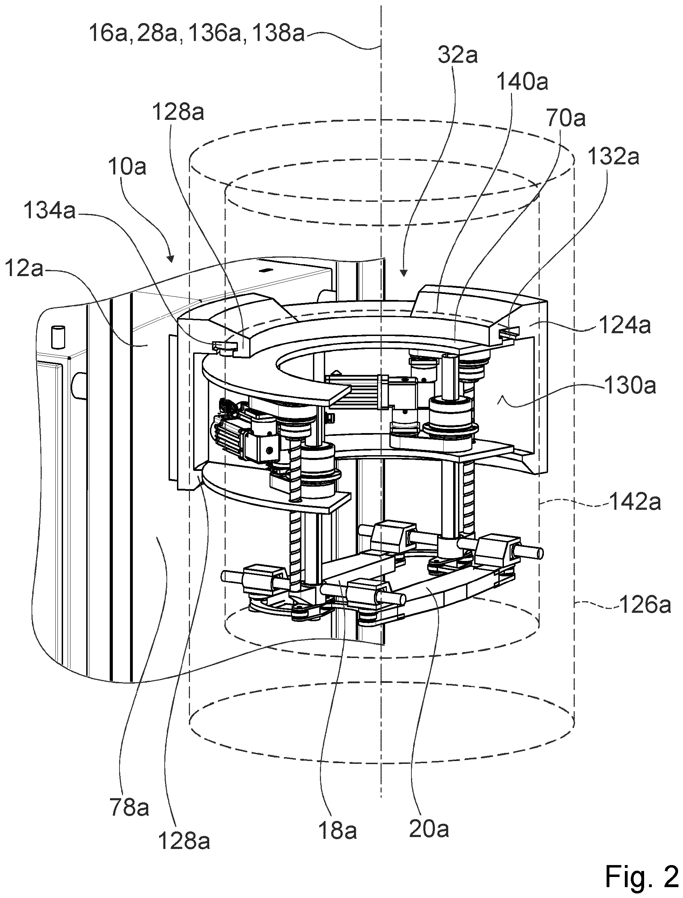

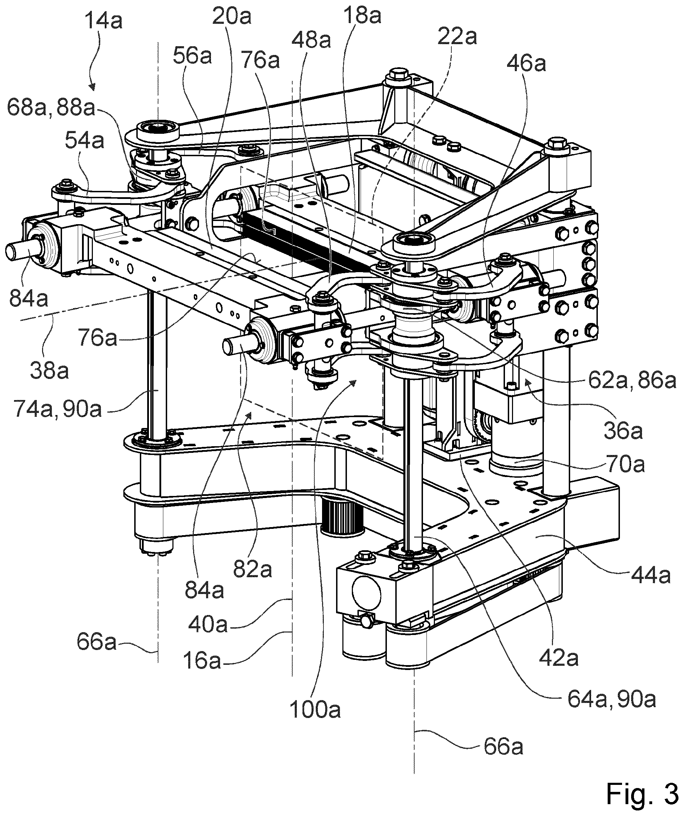

Figure 2 shows a schematic structure of the transverse sealing device that is at least partially different form an actual implementation of the transverse sealing device 14a, which is shown in Figure 3. However, Figure 2 illustrates the interaction of a guide unit 32a of the vertical form fill sealing machine 10a with the transverse sealing device 14a. The guide unit 32a of the vertical form fill sealing machine 10a is intended to guide the rotation of the transverse sealing device 14a around the rotation axis 16a at least substantially as a whole. The guide unit 32a comprises at least one guide element 124a. The at least one guide element 124a delimits at least partially an at least substantially circular cylindrical receiving area 126a within which the transverse sealing device 14a is at least substantially completely arranged. The term "substantially completely" is here to mean at least 75% and particularly preferably at least 90% of a total volume of an object, preferably of a total volume of a circular cylinder that just completely encloses the object, and/or a total mass of the object, in particular of the transverse sealing device. The guide unit 32a is at least partially arranged on the machine frame 12a.

The at least one guide element 124a is arranged on the machine frame 12a. The at least one guide element 124a is implemented integrally with the machine frame 12a. "Implemented integrally" is in particular to mean connected at least by substance-to-substance bond, for example by a welding process, a gluing process, an injection-molding process, and/or another process that is deemed expedient by someone skilled in the art, and/or advantageously formed in one piece, like for example by a production from a cast and/or by a production in a one-component or multi-component injection-molding procedure, and advantageously from a single blank. Alternatively, it is also conceivable that the guide element 124a is arranged in a detachable, in particular a non-destructive, manner on the machine frame 12a. The at least one guide element 124a is circle-shaped, at least viewed in a direction parallel to the rotation axis 16a of the transverse sealing device 14a. The at least one guide element 124a has an annulus-form, particularly preferable an annulus-segment-form, at least viewed in the direction parallel to the rotation axis 16a of the transverse sealing device 14a. The at least one guide element 124a has a hollow-cylinder form, wherein the guide element 124a has at each end of the hollow-cylinder-formed guide element 124a a protrusion 128a, in particular on an inside wall 130a of the guide element 124a. The inside wall 130a is circular-cylinder-shaped, in particular except from the protrusions 128a. At least part of the transverse sealing device 14a is arranged between the protrusions 128a of the guide element 124a, preferably in contact with the protrusions 128a. The at least one guide element 124a has a guide groove 132a. The guide groove 132a is arranged on one of the protrusions 132a of the guide element 124a. Alternatively or additionally, it is also conceivable that the guide element 124a has at least one guide knob, at least one guide stud or the like. Furthermore, it is also conceivable alternatively that the guide element 124a is implemented as a guide rail, a guide groove, a guide knob, a guide stud or the like. Alternatively, it is also conceivable that the guide unit 32a of the vertical form fill sealing machine 10a comprises a plurality of guide elements 124a, which are arranged in a circular manner. The guide groove 132a has an undercut. Alternatively it is also conceivable, that the guide groove 132a of the guide element 124a is implemented free from an undercut.

It is conceivable that the at least one guide element 124a has a plurality of snap-in points, in particular spaced-apart from each other, along a guide direction of the at least one guide element 124a, wherein the transverse sealing device 14a can be snapped in at the snap-in points. Alternatively, it is also conceivable that the at least one guide element 124a is free from any snap-in points. Preferably, the transverse sealing device 14a can be fixed steplessly along the at least one guide element 124a, e.g. via a clamping connection or the like. The at least one guide element 124a is arranged on an inner wall 78a of the machine frame 12a. The at least one guide element is implemented integrally with the inner wall 78a of the machine frame 12a. Alternatively it is also conceivable, that the at least one guide element 124a of the guide unit 32a of the vertical form fill sealing machine 10a is arranged detachably on the inner wall 78a of the machine frame 12a, in particular in a non-destructive manner. The inner wall 78a of the machine frame 12a is arranged on a side of the machine frame 12a that faces towards the transverse sealing device 14a. The inner wall 78a is plane. Alternatively, it is also conceivable that the inner wall 78a is at least partially circular cylindrical shaped or has a polygonal shape, at least viewed in the direction parallel to the rotation axis 16a.

The guide unit 32a comprises at least one further guide element 134a, which is arranged on the transverse sealing device 14a. The at least one further guide element 134a is implemented as a guide knob. The at least one further guide element 134a is implemented in such a way, that the further guide element 134a engages in the undercut of the guide groove 132a. Alternatively it is also conceivable that the at least one further guide element 134a is implemented as a guide rail, a guide groove, a guide stud or the like. It is also conceivable that the guide unit 32a of the vertical form fill sealing machine 10a comprises a plurality of further guide elements 134a, which are arranged on the transverse sealing device 14a. The at least one further guide element 134a is implemented correspondingly to the at least one guide element 124a. The at least one further guide element 134a is arranged on a bottom side or a top side of the transverse sealing device 14a, at least viewed in the direction parallel to the rotation axis 16a. Alternatively it is also conceivable that the at least one further guide element 134a is arranged laterally to the transverse sealing device 14a, at least viewed in the direction parallel to the rotation axis 16a. The at least one further guide element 134a is implemented integrally with the transverse sealing device 14a. Alternatively it is also conceivable, that the at least one further guide element 134a of the guide unit 32a of the vertical form fill sealing machine 10a is arranged detachably on the transverse sealing device 14a, in particular in a non-destructive manner.

It is conceivable that the guide unit 32a and/or the machine frame 12a have/has one or more bearing points, in which the transverse sealing device 14a, in particular the frame 70a of the transverse sealing device 14a, is movably connected to the guide unit 32a and/or to the machine frame 12a. At least one bearing point is arranged on the bottom side or the top side of the transverse sealing device 14a, at least viewed in the direction parallel to the rotation axis 16a, preferably on at least one of the protrusions 128a of the guide element 124a. It is also conceivable alternatively that at least one bearing point is located laterally to the transverse sealing device 124a. Alternatively or additionally, at least one bearing point is located centrally relative to the transverse sealing device 14a on the bottom side or the top side of the transverse sealing device 14a, at least viewed in the direction parallel to the rotation axis 16a, in particular in such a way that the rotation axis 16a of the transverse sealing device 14a goes through the at least one bearing point.

The circular cylindrical shaped receiving area 126a is at least partially delimited by the inside wall 130a of the guide element 124a. The protrusions 128a of the guide element 124a protrude into the cylindrical shaped receiving area 126a. A curvature, in particular a curvature radius of the curvature, of the at least one guide element 124a, in particular of the inside wall 130a of the guide element 124a, is equivalent to a curvature, in particular a curvature radius of the curvature, of the at least substantially circular cylindrical receiving area 126a. The at least substantially circular cylindrical receiving area 126a is encompassed along a circumferential direction of the at least substantially circular cylindrical receiving area 126a by the at least one guide element 124a, in particular the inside wall 130a of the guide element 124a, by at least 75°, preferably by at least 90 °. The circumferential direction of the at least substantially circular cylindrical receiving area 126a runs in a plane which is perpendicular to a main extension axis 136a of the at least substantially circular cylindrical receiving area 126a. By a "main extension axis" of an object or an area is herein in particular an axis to be understood which extends parallel to a longest edge of a smallest geometric rectangular cuboid that just still completely encloses the object or the area respectively. It is also conceivable alternatively, that the at least substantially circular cylindrical receiving area 126a is encompassed by the at least one guide element 124a, in particular the inside wall 130a of the guide element 124a, along the circumferential direction of the at least substantially circular cylindrical receiving area 126a by at least 135° and preferably by at least 180°. Alternatively, it is also conceivable, that the at least substantially circular cylindrical receiving area 126a is encompassed by the at least one guide element 124a, in particular the inside wall 130a of the at least one guide element 124a, along the circumferential direction of the at least substantially circular cylindrical receiving area 126a by the at least one guide element 124a by less than 75°.

The main extension axis 136a of the at least substantially circular cylindrical receiving area 124a is arranged within a proximity area of the rotations axis 16a of the transverse sealing device 14a. The proximity area of the rotation axis 16a of the transverse sealing device 14a has a maximum extension starting from the rotation axis 16a of the transverse sealing device 14a, which is in particular oriented perpendicularly to the rotation axis of the transverse sealing device, whose value is maximally 20 %, particularly preferable maximally 10 %, of a value of a maximum transverse extent of the transverse sealing device 14a. The maximum transverse extent of the transverse sealing device 14a is oriented at least substantially perpendicularly to the vertical movement axis 40a of the guide unit 82a of the transverse sealing device 14a and/or to the rotation axis 16a of the transverse sealing device 14a. The main extension axis 136a of the at least substantially circular cylindrical receiving area 124a is equivalent to the rotation axis 16a of the transverse sealing device 14a.

The transverse sealing device 14a comprises at least two sealing jaws 18a, 20a. Each of the at least two sealing jaws 18a, 20a has a sealing surface 76a. The sealing surfaces 76a of the at least two sealing jaws 18a, 20a are arranged facing each other. The sealing surfaces 76a of the at least two sealing jaws 18a, 20a are in contact with the packaging material in the sealing position in order to create a sealing in the packaging material. The sealing surfaces 76a of the at least two sealing jaws 18a, 20a run at least substantially parallel to each other. The main extension axis 136a of the at least substantially circular cylindrical receiving area 124a is located in a proximity area of a sealing plane 22a of the at least two sealing jaws 18a, 20a. The rotation axis 16a is located in the sealing plane 22a of the at least two sealing jaws 18a, 20a. The sealing plane 22a of the at least two sealing jaws 18a, 20a is in particular defined by the sealing surfaces 76a of the at least two sealing jaws 18a, 20a in a position in which the sealing surfaces 76a of the at least two sealing jaws 18a, 20a are directly adjacent to each other, preferably in contact with each other. The proximity area of the sealing plane 22a has a maximum extension starting from the sealing plane 22a, which is in particular oriented perpendicularly to the sealing plane 22a, whose value is maximally 20 %, particularly preferably maximally 10 %, of a value of the maximum transverse extent of the transverse sealing device 14a. The main extension axis 136a of the at least substantially circular cylindrical receiving area 124a is located in the sealing plane 22a of the at least two sealing jaws 18a, 20a. The rotation axis 16a of the transverse sealing device 14a intersects with a proximity area of a center point of the at least two sealing jaws 18a, 20a relative to the sealing surfaces 76a of the at least two sealing jaws 18a, 20a or goes through the center point of the sealing area of the sealing surfaces 76a of the at least two sealing jaws 18a, 20a. The proximity area of the center point preferably has a maximum extension starting from the center point, whose value is maximally 20 % of a value of a maximum transverse extent of the transverse sealing device 14a. In particular, the maximum transverse extent of the transverse sealing device runs 14a at least substantially perpendicularly to the vertical movement axis 40a of the guide unit 82a and/or to the sealing surfaces 76a of the at least two sealing jaws 18a, 20a.

The transverse sealing device 14a has a central axis 138a, which in particular intersects a center point of the transverse sealing device 14a. The main extension axis 136a of the at least substantially circular cylindrical receiving area 124a is arranged in a proximity area of the central axis 138a of the transverse sealing device 14a. The center point of the transverse sealing device 14a is the geometric center of the transverse sealing device 14a. The central axis 138a of the transverse sealing device 14a is equivalent to a main extension axis of the transverse sealing device 14a. The central axis 138a of the transverse sealing device 14a is equivalent to the rotation axis 16a of the transverse sealing device 14a. Alternatively, it is also conceivable that the central axis 138a of the transverse sealing device 14a is different from the rotation axis 16a of the transverse sealing device 14a. The proximity area of the central axis 138a of the transverse sealing device 14a has a maximum extension starting from the central axis 138a of the transverse sealing device 14a, which is in particular oriented perpendicularly to the central axis 138a of the transverse sealing device 14a, whose value is maximally 20 %, particularly preferably maximally 10 %, of a value of a maximum transverse extent of the transverse sealing device 14a.

The guide element 124a of the guide unit 32a of the vertical form fill sealing machine 10a defines a circle-shaped guideway 140a, wherein the transverse sealing device 14a is arranged at least substantially completely within a circular cylinder 142a corresponding to the circle-shaped guideway 140a. The circular cylinder 142a corresponding to the circle-shaped guideway 140a differs, especially in a radius, from the circular cylindrical receiving area 126a. The circle shaped guideway 140a is defined by the guide groove 132a of the guide element 124a. Alternatively it is also conceivable that the circular cylinder 142a corresponding to the circle-shaped guideway 140a is equivalent to the circular cylindrical receiving area 126a. In particular it is conceivable alternatively, that the circular cylindrical shaped receiving area 126a is at least partially delimited by the circle-shaped guideway 140a of the guide element 124a.

The transverse sealing device 14a has at least partially a circle-shaped outside contour, at least viewed in a direction parallel to the rotation axis 16a. The outside contour 16a of the transverse sealing device 14a constitutes a full circle, at least viewed in the direction parallel to the rotation axis 16a. A curvature, preferably at least a curvature radius of the curvature, of the at least partially circle-shaped outside contour is equivalent to the curvature, preferably the radius of the curvature, of the at least one guide element 124a, in particular the inside wall 130a of the guide element 124a, preferably at least viewed in the direction parallel to the rotation axis 16a. The at least partially circle-shaped outside contour is arranged on a side of the transverse sealing device 14a that faces the machine frame 12a, in particular the inner wall 78a of the machine frame 12a. The frame 70a of the transverse sealing device 14a constitutes the at least partially circle-shaped outside contour of the transverse sealing device 14a. Alternatively, it is also conceivable, that at least one of the at least two sealing jaws 18a, 20a or another component of the transverse sealing device 14a constitute/s the at least partially circle-shaped outside contour of the transverse sealing device 14a. It is also conceivable, that the transverse sealing device 14a has a circular cylindrical outside wall.

The guide element 124a, in particular the inside wall 130a of the guide element 124a, encompasses the transverse sealing device 14a in at least one rotational position of the transverse sealing device 14a relative to the guide element 124a by at least 75° along a circumferential direction of the transverse sealing device 14a. The circumferential direction of the transverse sealing device 14a runs in a plane which is perpendicular to the rotation axis 16a of the transverse sealing device 14a. Alternatively, it is conceivable that the guide element 124a, in particular the inside wall 130a of the guide element 124a encompasses the transverse sealing device 14a in at least one further rotational position of the transverse sealing device 14a relative to the guide element 124a, by less than 75° along the circumferential direction of the transverse sealing device 14a. Preferably, the at least one guide element 124a encompasses the transverse sealing device 14a in the at least one rotational position of the transverse sealing device 14a relative to the guide element 124a, by at least 90°. It is also conceivable that the at least one guide element 124a encompasses the transverse sealing device 14a in the at least one rotational position of the transverse sealing device 14a relative to the guide element 124a by at least 180° and particularly preferably by 360° along the circumferential direction of the transverse sealing device 14a.

The main extension axis 136a of the at least substantially circular cylindrical receiving area 126a is arranged within a proximity area of a central axis 28a of the filling tube 26a, and is in particular equivalent to the central axis 28a of the filling tube 26a. The rotation axis 16a of the transverse sealing device 14a is arranged within the proximity area of the central axis 28a of the filling tube 26a, and is in particular equivalent to the central axis 28a of the filling tube 26a. The central axis 28a of the filling tube 26a is equivalent to a main output axis of the filling tube 26a. It is also conceivable that the central axis 28a of the filling tube 26a is equivalent to a main extension axis of the filling tube. The proximity area of the central axis 28a of the filling tube 26a has a maximum extension starting from the central axis 28a of the filling tube 26a, in particular running perpendicularly to the central axis 28a of the filling tube 26a, whose value is maximally 20 %, particularly preferably maximally 10 %, of a value of the maximum transverse extent of the transverse sealing device 14a. The central axis 28a of the filling tube 26a runs at least substantially parallel to the rotation axis 16a of the transverse sealing device 14a and/or the main extension axis 136a of the at least substantially circular cylindrical receiving area 126a. The filling station 24a is arranged in such a way that the vertical movement axis 40a of the guide unit 82a, intersects with the filling station 24a. The central axis 28a of the filling tube 24a runs at least substantially parallel to the vertical movement axis 40a of the guide unit 82a, and/or the sealing surfaces 76a of the at least two sealing jaws 18a, 20a.

The vertical form fill sealing machine 10a comprises a drive unit 30a to drive the movement unit so as to generate a rotation of the transverse sealing device 14a at least substantially as a whole around the rotation axis 16a. Exemplarily, the drive unit 30a of the vertical form fill sealing machine 10a is implemented as an electromotor, as a pneumatic motor or as another drive unit that appears reasonable to a person skilled in the art. The vertical form fill sealing machine 10a comprises a control unit (not shown here) to control a drive of the drive unit 30a of the vertical form fill sealing machine 10a. The control unit comprises at least a processor and a storage element as well as an operation program stored on the storage element. The storage element is preferably implemented as a digital storage element, for example as a hard disk or the like. The control unit controls the drive of the drive unit 30a of the vertical form fill sealing machine 10a automatically, in particular depending on a running operation program of the control unit. Alternatively or additionally, it is conceivable that the vertical form fill sealing device 10a comprises an input unit (not shown here) to manually control the drive unit 30a of the vertical form fill sealing machine 10a for rotating the transverse sealing device 14a at least substantially as a whole around the rotation axis 16a. Exemplarily, the input unit comprises a keyboard, a touchscreen, buttons, an adjustment wheel or the like. It is conceivable that the input unit is attached to the machine frame 12a or is part of an external unit such as a server, a smartphone, a laptop, a remote control or the like, which in particular has a data connection to the control unit of the vertical form fill sealing machine 10a. Furthermore, it is additionally or alternatively also conceivable that the vertical form fill sealing machine 10a comprises at least one mechanical control element which is intended to be operated manually by a user. Exemplarily, the at least one mechanical control element is implemented as a lever, as a mechanical adjustment wheel or the like. The transverse sealing device 10a is rotatable at least substantially as a whole by means of the drive unit 30a of the vertical form fill sealing machine 10a and/or manually by means of the at least one mechanical control element during operation of the vertical form fill sealing 10a machine, in particular during sealing of the packaging material and/or filling of packages. Additionally or alternatively, it is also conceivable that the transverse sealing device 14a is rotatable at least substantially as a whole when the vertical form fill sealing machine 10a does not fill packages and/or seal packaging material. Alternatively or additionally, it is also conceivable that the transverse sealing 10a device is rotatable at least substantially as a whole around the rotation axis 16a of the transverse sealing device 14a by hand free from any addition mechanical control elements or the like.

Figure 3 shows the transverse sealing device 14a in a detailed view. The at least two sealing jaws 18a, 20a are movably, in particular linearly movably, connected to the frame 70a, in particular via the guide unit 82a of the transverse sealing device 14a. The transverse sealing device 14a comprises the guide unit 82a to guide the at least two sealing jaws 18a, 20a during a movement, in particular relative to the frame 70a. The transverse sealing device 14a, in particular the guide unit 82a, comprises two guide elements 64a, 74a to guide the at least two sealing jaws 18a, 20a during a vertical movement of the at least two sealing jaws 18a, 20, in particular relative to the frame 70a and/or the machine frame 12a. Alternatively, it is also conceivable that the transverse sealing device 14a, in particular the guide unit 82a, comprises only one guide element or more than two guide elements. The two guide elements 64a, 74a of the guide unit 82a are embodied as guide rods, which are in particular arranged rotatably relative to the frame 70a. Alternatively it is also conceivable that the two guide elements 64a, 74a of the guide unit 82a are embodied as other guide elements that appear reasonable to a person skilled in the art. The guide unit 82a comprises two further guide elements 84a to guide the at least two sealing jaws 18a, 20a during a horizontal movement of the at least two sealing jaws 18a, 20a relative to each other. The two further guide elements 84a of the guide unit 82a are embodied differently from the two guide elements 64a, 74a of the guide unit 82a. The two further guide elements 84a of the guide unit 82a are implemented as guide rods or the like, which are in particular arranged in a rotationally fixed manner relative to the frame 70a.

The transverse sealing device 14a comprises at least one movement unit 36a to move the at least two sealing jaws 18a, 20a, in particular translationally, relative to each other along a direction parallel to a horizontal movement axis 38a of the guide unit 82a and/or to move the at least two sealing jaws 18a, 20a, in particular translationally, along a direction parallel to a vertical movement axis 40a of the guide unit 82a. The transverse sealing device 14a comprises at least to drive units 42a, 44a to provide a driving force so as to generate a horizontal movement and/or a vertical movement of the at least two sealing jaws 18a, 20a, preferably relative to the frame 70a and/or relative to the machine frame 12a. One drive unit 44a of the at least two drive units 42a, 44a is configured to drive the movement unit 36a so as to generate a horizontal movement of the at least two sealing jaws 18a, 20a relative to each other. At least one further drive unit 42a of the at least two drive units 42a, 44a is configured to drive the movement unit 36a so as to generate a vertical movement of the at least two sealing jaws 18a, 20a. Alternatively, it is also conceivable that the drive unit 44a or the further drive unit 42a is configured to drive the movement unit 36a so as to generate the horizontal movement and the vertical movement of the at least two sealing jaws 18a, 20a. The further drive unit 42a of the at least two drive units 42a, 44a comprises a lifting fork, a transmission belt, a gear wheel, or the like for transmitting a driving force of the at least one further drive unit 42a to the at least two sealing jaws 18a, 20a in order to generate a vertical movement of the at least two sealing jaws 18a, 20a, in particular relative to the frame 70a. Alternatively it is also conceivable that the further drive unit 42a is configured for driving the movement unit 36a to generate the vertical movement of the at least two sealing jaws 18a, 20a, in particular relative to the frame 70a. The horizontal movement axis of the at least two sealing jaws 18a, 20a relative to each other runs along the direction parallel to the horizontal movement axis 38a of the guide unit 82a. The vertical movement of the at least two sealing jaws 18a, 20a runs along the direction parallel to the vertical movement axis 40a of the guide unit 82a. The at least two drive units 42a, 44a of the transverse sealing device 14a are implemented as electromotors. Alternatively, it is also conceivable that the at least two drive units 42a, 44a of the transverse sealing device 14a are implemented as pneumatic motors or as another drive unit that appears reasonable to a person skilled in the art. The drive unit 44a and the further drive unit 42a of the transverse sealing device 14a are arranged in an at least substantially positionally fixed manner relative to the machine frame 12a. In particular, that a drive unit is arranged "in an at least substantially positionally fixed manner" means free from any movement other than a movement of mechanical components of the drive unit which inevitably move during operation of the drive unit.

The horizontal movement axis 38a of the guide unit 82a runs at least substantially perpendicularly to the rotation axis 16a of the transverse sealing device 14a.

The term "substantially perpendicularly" is here in particular to mean an orientation of a direction relative to a reference direction, wherein the direction and the reference direction, in particular viewed in a projection plane, include a 90°-angle and the angle has a maximum deviation of in particular less than 8°, advantageously less than 5° and especially advantageously less than 2°. The vertical movement axis 40a of the guide unit 82a runs at least substantially parallel to the rotation axis 16a of the transverse sealing device 14a. The term "substantially parallel" is here in particular to mean an orientation of a direction relative to a reference direction, in particular in a plane, wherein the direction has a deviation from the reference direction that is smaller than 8°, advantageously smaller than 5° and especially advantageously smaller than 2°. The at least two sealing jaws 18a, 20a are configured to seal a packaging material, which is in particular arrangeable between the at least two sealing jaws 18a, 20a. The horizontal movement axis 38a of the guide unit 82a runs at least substantially perpendicularly to the sealing surfaces 76a of the at least two sealing jaws 18a, 20a. The sealing surfaces 76a of the at least two sealing jaws 18a, 20a run at least substantially perpendicularly to the vertical movement axis 38a of the guide unit 82a. The rotation axis 16a of the transverse sealing device 14a runs at least substantially parallel to the sealing surfaces 76a of the at least two sealing jaws 18a, 20a.

The movement unit 36a is arranged at least substantially completely sideways relative to the at least two sealing jaws 18a, 20a, at least viewed in a direction parallel to a horizontal movement axis 38a of the guide unit 82a. By the fact that an object is arranged "at least substantially completely sideways relative to a further object" is here to be understood that at least 75% and particularly preferably at least 90% of a total volume and/or a total mass of the object are arranged sideways relative to the further object. Preferably, in at least one operation state of the movement unit, the movement unit is arranged completely sideways relative to the at least two sealing jaws, at least viewed in the direction parallel to the horizontal movement axis. The movement unit 36a is embodied differently from the drive unit 44a and/or the further drive unit 42a. The movement unit 36a is embodied differently from a guide unit 82a of the transverse sealing device 14a, in particular at least differently from positionally fixed guide elements of the transverse sealing device 14a. The guide unit 82a is preferably configured to guide a movement of the at least two sealing jaws 18a, 20a. The at least two sealing jaws 18a, 20a are, in particular linearly, movably supported along the direction parallel to the horizontal movement axis 38a of the guide unit 82a. The at least two sealing jaws 18a, 20a are, in particular linearly, movably supported along the direction parallel to a vertical movement axis 40a of the guide unit 82a.

The movement unit 36a is configured to convert a power generatable by the drive unit 44a and/or the further drive unit 42a and acting onto the at least two sealing jaws 18a, 20a into a horizontal movement of the at least two sealing jaws 18a, 20a relative to each other and/or to generate a vertical movement of the at least two sealing jaws 18a, 20a, in particular relative to the frame 70a and/or the machine frame 12a. The vertical movement axis 40a extends at least substantially parallel to the sealing surfaces 76a of the at least two sealing jaws 18a, 20a and/or at least substantially perpendicularly to the horizontal movement axis 38a.

The movement unit 36a is arranged sideways relative to the at least two sealing jaws 18a, 20a in such a way that the movement unit 36a is positioned at least substantially completely within a proximity area of the at least two sealing jaws 18a, 20a. By the fact that the movement unit 82a is arranged sideways relative to the at least two sealing jaws 18a, 20a in such way that the movement unit 36a is positioned at least substantially completely within the proximity area of the at least two sealing jaws 18a, 20a, is here to be understood that the movement unit 36a is arranged sideways relative to the at least two sealing jaws 18a, 20a in such a way that at least 75% and particularly preferably at least 90% of a total volume and/or a total mass of the movement unit 36a are arranged sideways relative to the at least two sealing jaws 18a, 20a within the proximity area of the at least two sealing jaws 18a, 20a. In particular, the proximity area of the at least two sealing jaws 18a, 20a extends by up to 20 %, preferably by up to 10 % and particularly preferably by up to 5 % of a maximum movement range of the at least two sealing jaws 18a, 20a in the direction parallel to the horizontal movement axis 38a beyond the at least two sealing jaws 18a, 20a. Preferably, the proximity area of the at least two sealing jaws 18a, 20a extends by up 20 %, preferably by up to 10 % and particularly preferably by up to 5 % of a maximum movement range of the at least two sealing jaws 18a, 20a along the direction parallel to the vertical movement axis 38a beyond the at least two sealing jaws 18a, 20a. Particularly preferably, the proximity area of the at least two sealing jaws 18a, 20a extends by up to 20 %, preferably up to 10 % and particularly preferably up to 5 % of a maximum extension of the at least two sealing jaws 18a, 20a perpendicularly to the vertical movement axis 40a and the horizontal movement axis 38a, beyond the at least two sealing jaws 18a, 20a.

The at least two sealing jaws 18a, 20a are pullable into a sealing position by means of the movement unit 36a. The at least two sealing jaws 18a, 20a are movable relative to each other into the sealing position free from a direct pushing movement on the at least two sealing jaws 18a, 20a by means of the movement unit 36a. The at least two sealing jaws 18a, 20a are pullable, relative to each other, into the sealing position along the direction parallel to the horizontal movement axis 38a by means of the movement unit 36a. The movement unit 36a is connected to the at least two sealing jaws 18a, 20a in such a way that the movement unit 36a is configured to generate a direct pulling force to pull the at least two sealing jaws 18a, 20a relative to each other into the sealing position. The movement unit 36a is connected to the at least two sealing jaws 18a, 20a in such a way that the at least two sealing jaws 18a, 20a are moved, in particular pulled, relative to each other in a synchronous movement. Alternatively it is also conceivable that the movement unit 36a is connected to the at least two sealing jaws 18a, 20a in such a way that the at least two sealing jaws 18a, 20a are moved, in particular pulled, relative to each other in an asynchronous movement.

The movement unit 36a comprises four movement elements 46a, 48a, 54a, 56a, in particular mechanical connection elements. Exemplarily, the four movement elements 46a, 48a, 54a, 56a are implemented as arms. Alternatively it is also conceivable that the four movement elements 46a, 48a, 54a, 56a are implemented as beams, as bearing elements, as gear wheels or the like. Alternatively, it is also conceivable that the movement unit 36a comprises merely one movement element or more than four movement elements. The four movement elements 46a, 48a, 54a, 56a are implemented identically to each other. Alternatively, it is also conceivable that the four movement elements 46a, 48a, 54a, 56a are embodied differently from each other. Two movement elements 46a, 48a, 54a, 56a of the four movement elements 46a, 48a, 54a, 56a are each movably, in particular rotatably, connected to one of the at least two sealing jaws 18a, 20a.

As an example, one movement element 46a of the four movement elements 46a, 48a, 54a, 56a is described here. The movement element 46a is directly, preferably movably, in particular rotatably, connected to one sealing jaw 18a of the at least two sealing jaws 18a, 20a. At least one further movement element 48a of the four movement elements 46a, 48a, 54a, 56a is directly, preferably movably, in particular rotatably, connected to a further sealing jaw 20a of the at least two sealing jaws 18a, 20a. The movement element 46a and the further movement element 48a are movable relative to each other, wherein preferably a movement of the at least two sealing jaws 18a, 20a relative to each other is generatable by a relative movement of the movement element 46a and the further movement element 48a. By a relative movement of the movement element 46a and the further movement element 48a the at least two sealing jaws 18a, 20a are pushable or pullable. The movement element 46a and the further movement element 48a are movable relative to each other to pull the at least two sealing jaws 18a, 20a towards each other into the sealing position. The movement of the movement element 46a and the further movement element 48a relative to each other, for moving the at least two sealing jaws 18a, 20a relative to each other, in particular into the sealing position, is generatable by a rotating movement of the movement unit 36a, in particular by a rotation of at least one additional movement element 86a of the movement unit 36a. Alternatively, it is also conceivable that the movement element 46a and the further movement element 48a are movable relative to each other to move the at least two sealing jaws 18a, 20a relative to each other by a pushing and/or pulling movement of the movement unit 36a, in particular by a pushing and/or pulling movement of the additional movement element 86a of the movement unit 36a.

The movement unit 36a comprises two torque resistant linear bushings 62a, 68a. The additional movement element 86a is constituted by one torque resistant linear bushing 62a of the at least two torque resistant linear bushings 62a, 68a. Alternatively, it is also conceivable that the movement unit 36a comprises merely one torque resistant linear bushing 62a or more than two torque resistant linear bushings. The at least two torque resistant linear bushings 62a, 68a are configured to transmit a drive torque, in particular from the at least one drive unit 44a, for moving the at least two sealing jaws 18a, 20a relative to each other along the direction parallel to the horizontal axis 38a. On each side of the at least two sealing jaws 18a, 20a, one of the two torque resistant linear bushings 62a, 68a is arranged, at least viewed in the direction parallel to the horizontal movement axis 38a guide unit 82a. The at least two torque resistant linear bushings 62a, 68a are arranged on averted sides of the at least two sealing jaws 18a, 20a, in particular sideways, at least viewed in a direction perpendicular to the horizontal movement axis 38a and the vertical movement axis 40a of guide unit 82a.

The movement element 46a and the further movement element 48a are movably, in particular rotatably, connected to one torque resistant linear bushing 62a of the two torque resistant linear bushings 62a, 68a. The torque resistant linear bushing 62a, the movement element 46a and the further movement element 48a are components of a crank slider mechanism 100a. The crank slider mechanism 100a is configured to transmit a driving force generatable by the drive unit 44a into a horizontal movement of the at least two sealing jaws 18a, 20a.The torque resistant linear bushing 62a is configured to transmit a driving force, in particular from the drive unit 44a, to the movement element 46a and the further movement element 48a for moving the at least two sealing jaws 18a, 20a relative to each other along the direction parallel to the horizontal movement axis 38a. A connection of two further movement elements 54a, 56a of the four movement elements 46a, 48a, 54a, 56a, one further additional movement element 88a of the movement unit 36a, in particular one further torque resistant linear bushing 68a of the two torque resistant linear bushings 62a, 68a, and the drive unit 44a is analogous to a connection of the movement element 46a, the further movement element 48a, the additional movement element 86a, in particular the torque resistant linear bushing 62a of the two torque resistant linear bushing 62a, 68a, and the drive unit 44a.

It is conceivable that the movement unit 36a, in particular at least one of the four movement elements 46a, 48a, 54a, 56a of the movement unit 36a, and the at least two sealing jaws 18a, 20a, in particular the movement area 60a of the at least two sealing jaws 18a, 20a, overlap with each other at least partially in at least one operation state of the at least two sealing jaws 18a, 20a, at least viewed in a direction perpendicular to the horizontal movement axis 38a of the guide unit 82a. An area behind and on front of the at least two sealing jaws 18a, 20a is at least substantially completely free from the movement unit 36a, at least viewed in the direction parallel to the horizontal movement axis 38a of the guide unit 82a.

The two torque resistant linear bushings 62a, 68a are each movably, in particular linearly movably, connected to one of the two guide elements 64a, 74a of the guide unit 82a. The at least one drive unit 44a is configured to drive the at least two guide elements 64a, 74a of the guide unit 82a to rotate around rotation axes 66a of the at least two guide elements 64a, 74a of the guide unit 82a in order to generate a horizontal movement of the two sealing jaws 18a, 20a relative to each other. The movement unit 36a is constituted by the two torque resistant linear bushings 62a, 68a, the two guide elements 64a, 74a of the guide unit 82a and the four movement elements 46a, 48a, 54a, 56a. Alternatively it is also conceivable that the movement unit 36a is constituted differently, in particular in a manner that appears reasonable to a person skilled in the art. The two torque resistant linear bushings 62a, 68a are each connected to one of the two guide elements 64a, 74a of the guide unit 82a in a rotationally fixed manner. The at least two guide elements 64a, 74a of the guide unit 82a are arranged at least substantially completely sideways relative to the at least two sealing jaws 18a, 20a, at least viewed in a direction parallel to the horizontal movement axis 38a of the guide unit 82a. Main extension axes of the at least two guide elements 64a, 74a of the guide unit 82a are at least substantially perpendicular to the horizontal movement axis 38a of the guide unit 82a. The main extension axes of the at least two guide elements 64a, 74a of the guide unit 82a are at least substantially parallel to the vertical movement axis 40a of the guide unit 82a. The main extension axes of the two guide elements 64a, 74a of the guide unit 82a correspond to their rotation axes 66a. A drive force of the drive unit 44a is transmittable to the two guide elements 64a, 74a of the guide unit 82a by means of a transmission belt, a gear wheel, or the like of the drive unit. The two guide elements 64a, 74a of the guide unit 82a constitute two further additional movement elements 90a of the movement unit 36a. The guide elements 64a, 74a of the guide unit 82a are rotatably connected to the frame 70a of the transverse sealing device 70a.

The two torque resistant linear bushings 62a, 68a can each be moved along the two guide elements 64a, 74a of the guide unit 82a for a vertical movement of the at least two sealing jaws 18a, 20a. The vertical movement of the at least two sealing jaws 18a, 20a is directly linked with a vertical movement of the two torque resistant linear bushings 62a, 68a. The at least one further drive unit 42a is configured to drive the movement unit 36c to generate the vertical movement of the at least two sealing jaws 18a, 20a relative to the frame 70a.

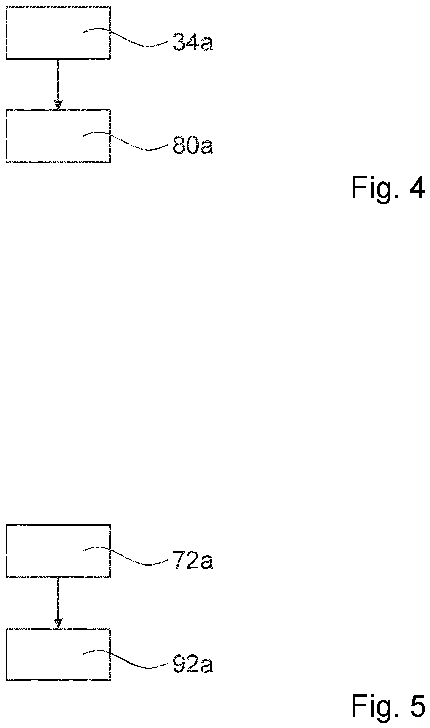

Figure 4 shows schematically a flow chart of a method for operating the vertical form fill sealing machine 10a. In a process step 34a the transverse sealing device 14a of the vertical form fill sealing machine 10a is rotated at least substantially as a whole around the rotation axis 16a of the transverse sealing device 14a relative to the machine frame 12a of the vertical form fill sealing machine 10a. It is conceivable that in the process step 34a the transverse sealing device 14a is rotated substantially as a whole during a sealing of the packaging material and/or a filling of packages, preferably by means of the drive unit 30a of the vertical form fill sealing machine 10a and/or manually by the at least one mechanical control element. It is also conceivable that in the process step 34a the transverse sealing device 14a is rotated at least substantially as a whole while the vertical form fill sealing machine 10a is not filling packages and/or sealing packaging material, preferably by means of the drive unit 30a of the vertical form fill sealing machine 10a and/or manually by the at least one mechanical control element. Preferably, in the process step 34a the transverse sealing device 14a is rotated at least substantially as a whole through an angle of 90° around the rotation axis 16a of the transverse sealing device 14a relative to the machine frame 12a. Alternatively, it is also conceivable that in the process step 34a the transverse sealing device 14a is rotated at least substantially as a whole around the rotation axis 16a of the transverse sealing device 14a through an angle other than 90° relative to the machine frame 12a.

In the process step 34a the transverse sealing device 14a is steplessly rotated substantially as a whole around the rotation axis 16a from the one work position of the transverse sealing device 14a for a transverse sealing of a packaging material to the further work position of the transverse sealing device 14a for a transverse sealing of a packaging material. In the process step 34a the transverse sealing device 14a is rotated at least substantially as a whole around the rotation axis 16a of the transverse sealing device 14a that is fixed in position relative to the machine frame 12a of the vertical form fill sealing machine 10a from the one work position of the transverse sealing device 14a for a transverse sealing of a packaging material to the further work position of the transverse sealing device 14a for a transverse sealing of a packaging material. Particularly preferably, in the process step 34a the transverse sealing device 14a is rotated substantially as a whole around the rotation axis 16a of the transverse sealing device 14a, in particular by means of the drive unit 30a of the vertical form fill sealing machine 10a and/or manually by means of the at least one mechanical control element, from the work position to the further work position free from any translational movement of the transverse sealing device 14a relative to the machine frame 12a.

In a further process step 80a the at least two sealing jaws 18a, 20a are moved into the sealing position for a transverse sealing of the packaging material. It is also conceivable that the at least two sealing jaws 18a, 20a are moved into the sealing position for a transverse sealing of the packaging material in the process step 34, in particular during the rotation of the transverse sealing device 14a around the rotation axis 16a of the transverse sealing device 14a relative to the machine frame 12a.

Figure 5 shows schematically a flow chart of a method for operating the transverse sealing device 14a for sealing a package or a packaging material. In a process step 72a the at least two sealing jaws 18a, 20a of the transverse sealing device 14a are pulled into a sealing position by means of the movement unit 36a of the transverse sealing device 14a. In the process step 72a at least the movement element 46a and the at least one further movement element 48a of the two movement elements 46a, 48a of the movement unit 36a are moved by the drive unit 44a relative to each other in order to generate a pulling force for pulling the at least two sealing jaws 18a, 20a towards each other into the sealing position. In the process step 72a a driving force for moving the at least two sealing jaws 18a, 20a relative to each other along the direction parallel to the horizontal movement axis 38a is transmitted by the two torque resistant linear bushings 62a, 68a of the movement unit 36a. In the process step 72a the drive unit 44a drives the guide elements 64a, 74a of the guide unit 82a to rotate around their rotation axes 66a in order to generate a rotation of the two torque resistant linear bushings 62a, 68a. In the process step 72a the rotational force of the torque resistant linear bushing 62a of the two torque resistant linear bushings 62, 68a is converted into a relative movement of the movement element 46a and the further movement element 48a in order to generate a pulling or pushing force for moving the at least two sealing jaws 18a, 20a relative to each other along the direction parallel to the horizontal movement axis 38a of the guide unit 82a. This applies analogously to the further torque resistant linear bushing 68a of the two torque resistant linear bushings 62a, 68a and the two further movement elements 54a, 56a. In a further process step 80a the at least two sealing jaws 18a, 20a are moved vertically relative to the frame 70a by means of the further drive unit 42a.

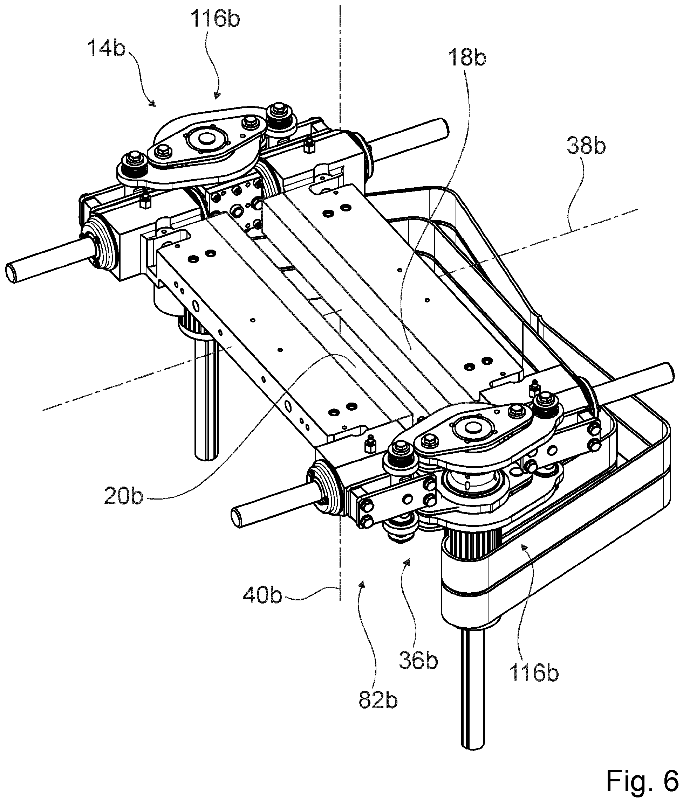

In figures 6 to 13 further exemplary embodiments of the invention are illustrated. The following description and the drawings are essentially limited to the differences between the exemplary embodiments, wherein as regards identically denominated components, in particular components having the same reference numerals, the drawings and/or the description of the other exemplary embodiment, in particular of figures 1 to 5, may principally be referred to. In order to distinguish between the exemplary embodiments, the letter a has been added to the reference numerals of the exemplary embodiment of figures 1 to 5. In the exemplary embodiments of figures 6 to 13 the letter a has been substituted by the letters b to g.

In figure 6 a transverse sealing device 14b is shown for a sealing of a package or a packaging material. The transverse sealing device 14b comprises at least two sealing jaws 18b, 20b. The transverse sealing device 14b comprises at least one movement unit 36b for moving the at least two sealing jaws 18b, 20b translationally relative to each other along a direction parallel to a horizontal movement axis 38b of a guide unit 82b of the transverse sealing device 14b and for moving the at least two sealing jaws 18b, 20b translationally along a direction parallel to a vertical movement axis 40b of the guide unit 82b, in particular relative to a frame (not shown here) of the transverse sealing device 14b. The movement unit 36b comprises two ball-screw slide mechanisms 116b, which are in particular arranged on averted sides of the at least two sealing jaws 18b, 20b. By means of the two ball-screw slide mechanisms 116b, a driving force of at least one drive unit (not shown here) of the transverse sealing device 14b can be converted into a horizontal movement and a vertical movement of the at least two sealing jaws 18b, 20b, in particular relative to the frame. The movement unit 36b is arranged at least substantantially completely sideways relative to the at least two sealing jaws 18b, 20b, at least viewed in a direction parallel to the horizontal movement axis 38b of the guide unit 82b. The movement unit 36b is arranged sideways relative to the at least two sealing jaws 18b, 20b in such a way that the movement unit 36b is positioned at least substantially completely within a proximity area of the at least two sealing jaws 18b, 20b, at least viewed in the direction parallel to the horizontal movement axis 38b of the guide unit 82b. The at least two sealing jaws 18b, 20b are pullable into a sealing position by means of the movement unit 36b.

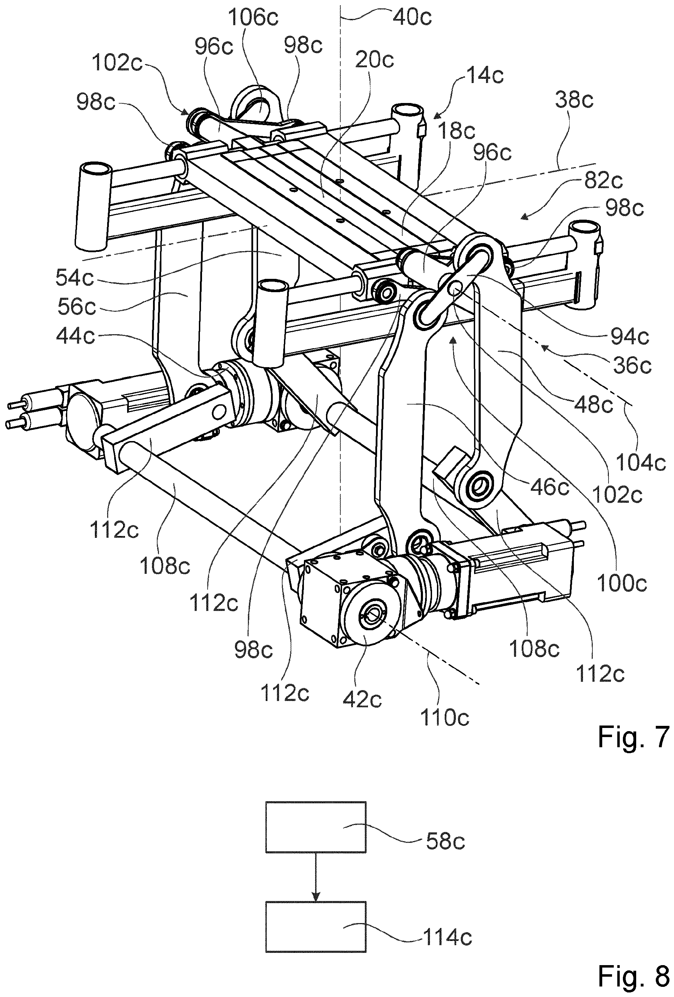

In figure 7 a transverse sealing device 14c is shown for a sealing of a package or a packaging material. The transverse sealing device 14c comprises at least two sealing jaws 18c, 20c. The transverse sealing device 14c comprises at least one movement unit 36c for moving the at least two sealing jaws 18c, 20c translationally relative to each other along a direction parallel to a horizontal movement axis 38c of a guide unit 82c of the transverse sealing device 14c and for moving the at least two sealing jaws 18c, 20c translationally along a direction parallel to a vertical movement axis 40c of the guide unit 82c, in particular relative to a frame (not shown here) of the transverse sealing device 14c. The transverse sealing device 14c comprises at least two drive units 42c, 44c for driving the movement unit 36c.

The at least two drive units 42c, 44c are connected to each other by the movement unit 36c in such a way that a horizontal movement and/or a vertical movement of the that least two sealing jaws 18c, 20c is generatable by a joint drive of the movement unit 36c by means of the at least two drive units 42c, 44c. A horizontal and/or a vertical movement of the at least two sealing jaws 18c, 20c is only generatable by a drive executed by all of the at least two drive units 42c, 44c. If at least one of the at least two drive units 42c, 44c is in a resting state, the movement unit 36c is blocked from any movement, in particular other than vibrational movements causable by a drive of the movement unit 36c by only one of the at least two drive units 42c, 44c, for generating a horizontal movement and/or a vertical movement of the at least two sealing jaws 18c, 20c. If the movement unit 36c is free from a drive executed by at least one of the at least two drive units 42c, 44c, a movement of the movement unit 36c for generating a horizontal movement and/or a vertical movement of the at least two sealing jaws 18c, 20c is blocked.

The movement unit 36c is drivable by the joint drive by means of the at least two drive units 42c, 44c in such a way that merely a horizontal movement of the at least two sealing jaws 18c, 20c is generated, in particular relative to a frame (not shown here) of the transverse sealing device 14c. The movement unit 36c is drivable by the joint drive by means of the at least two drive units 18c, 20c in such a way that merely a vertical movement of the at least two sealing jaws 18c, 20c is generated, in particular relative to the frame of the transverse sealing device 14c.

It is also conceivable that the movement unit 36c is drivable by the joint drive by means of the at least two drive units 42c, 44c in such a way that simultaneously a horizontal movement and a vertical movement of the at least two sealing jaws 18c, 20c is generated, in particular relative to the frame of the transverse sealing device 14c.

The movement unit 36c comprises two movement elements 46c, 48c in order to create a movable connection between the two drive units 42c, 44c and the at least two sealing jaws 18c, 20c. The two movement elements 46c, 48c are implemented as arms. Alternatively, it is also conceivable that the two movement elements 46c, 48c are implemented as beams, as bearing elements, in particular as torque resistant linear bushings, as gear wheels or the like. The movement unit 36c comprises at least one drive connection element 94c to connect the at least two drive units 42c, 44c mechanically to each other. The drive connection element 94c is implemented as a beam. Alternatively, it is also conceivable that the drive connection element 94c is implemented as an arm, a bearing element, in particular a torque resistant linear bushing, a gear wheel or the like. The drive connection element 94c is connected to the at least two drive units 42c, 44c by the two movement elements 46c, 48c of the movement unit 36c. Alternatively, it is also conceivable that at least one drive unit 42c, 44c of the at least two drive units 42c, 44c is directly connected, in particular movably connected, to the drive connection element 94c, preferably free from any additional movement elements. The drive connection element 94c is connected to the at least two sealing jaws 18c, 20c via at least one additional movement element 96c of the movement unit 36c, which is preferably connected to the drive connection element 94c in a rotationally fixed manner. The movement unit 36c comprises at least two slider elements 98c, which are in particular movably, in particular rotatably, connected to the additional movement element 94c and/or the at least two sealing jaws 18c, 20c.

The drive connection element 94c, the two slider elements 98c and the additional movement element 96c are components of a crank slider mechanism 100c, which is in particular arranged between the at least two movement elements 46c, 48c and the at least two sealing jaws 18c, 20c. The two slider elements 98c are implemented as arms. Alternatively, the two slider elements are implemented as beams, bearing elements, gear wheels, or the like. The drive connection element 94c is preferably connected to the additional movement element 96c via a rod 102c or the like. Alternatively it is also conceivable that the additional movement element 96c and the drive connection element 94c are implemented integrally with each other. The crank slider mechanism 100c is preferably configured to convert a driving force generatable by the at least two drive units 18c, 20c, in particular a movement of the drive connection element 94c, into a horizontal and/or vertical movement of the at least two sealing jaws 18c, 20c. The drive connection element 94c is merely movable by the joint drive of the at least two drive units18c, 20c. In particular, in a preferred implementation of the invention, the drive connection element can be driven to rotate around a rotation axis 104c of the drive connection element 94c by the joint drive by means of the at least two drive units 18c, 20c such as to generate a horizontal movement of the at least two sealing jaws 18c, 20cThe rotation axis 104c of the drive connection element 94c runs at least substantially parallel to the sealing surfaces 76a of at least two sealing jaws 18c, 20c. The rotation axis 104c of the drive connection element 94c runs at least substantially perpendicularly to the horizontal movement axis 38c of the guide unit 82c and to the vertical movement axis 40c of the guide unit 82c.

The movement unit 36c has an analogous structure on both sides of the at least two sealing jaws 18c, 20c. The movement unit 36c comprises a further drive connection element 106c, which is in particular implemented identically to the drive connection element 94c. Alternatively it is also conceivable that the further drive connection element 106c is embodied differently from the drive connection element 94c. The drive connection element 94c and the further drive connection element 106c are arranged on averted sides of the at least two sealing jaws 18c, 20c. A connection of the further drive connection element 106c to the at least two sealing jaws 18c, 20c is preferably analogous to a connection of the drive connection element 94c to the at least two sealing jaws 18c, 20c. A connection of the further drive connection element 106c to the at least two drive units 42c, 44c is analogous to a connection of the drive connection element 94c to the at least two drive units 42c, 44c. The movement unit 36c comprises at least two further movement elements 54c, 56c, whose connection with the at least two sealing jaws 18c, 20c is analogous to a connection of the at least two movement elements 46c, 48c with the at least two sealing jaws 18c, 20c. A connection of the at least two further movement elements 54c, 56c with the further drive connection element 106c is analogous to a connection of the at least two movement elements 46c, 48c with the drive connection element 94c. A connection of the at least two further movement elements 54c, 56c with the at least two drive units 42c, 44c is analogous to a connection of the at least two movement elements 46c, 48c with the at least two drive units 42c, 44c. The at least two movement elements 46c, 48c and the at least two further movement elements 54c, 56c are arranged on averted sides of the at least two sealing jaws 18c, 20c. The at least two drive units 42c, 44c are arranged at least partially sideways to the at least two sealing jaws 18c, 20c, at least viewed in a direction parallel to the horizontal movement axis 38c. Alternatively, it is also conceivable that the two drive units 42c, 44c are arranged in a central position relative to the at least two movement elements 46c, 48c and the at least two further movement elements 54c, 56c, preferably at least viewed in the direction parallel to the horizontal movement axis 38c of the guide unit 82c. Furthermore, it is alternatively also conceivable that the at least two drive units 42c, 44c are arranged differently, in particular in a way that appears reasonable to a person skilled in the art. The movement unit 36c is implemented of four movement elements 46c, 48c, 54c, 56c, in particular the two movement elements 46c, 48c and the two further movement elements 54c, 56c, two drive connection elements 94c, 106c, in particular the drive connection element 94c and the further drive connection element 106c, four slider elements 98c, two of the four slider elements 98c being embodied by the already aforementioned at least two slider elements 98c, two rods 102c, one of the two rods 102c being in particular embodied by the already aforementioned rod 102c, and two additional movement elements 96c, one of the two additional movement elements 96c being embodied by the already aforementioned additional movement element 96c. Alternatively it is also conceivable that the movement unit 36c is implemented of merely one drive connection element, one rod, two movement elements, two slider elements and one additional movement element. Furthermore, other embodiments of the movement unit 36c are conceivable which seem to be reasonable for a person skilled in the art. In particular, it is conceivable that the movement unit 36c is embodied without any rods 102c.

Each of the at least two drive units 42c, 44c comprises at least one drive shaft 108c. A drive direction of a drive unit 42c, 44c of the at least two drive units 42c, 44c corresponds to a direction of rotation of a rotation of the drive shaft 108c around the rotation axis 110c of the drive shaft 108c. The rotation axes 110c of the drive shafts 108c correspond to main extension axes of the respective drive shafts 108c. The rotation axes 110c of the drive shafts 108c of the at least two drive units 42c, 44c preferably run at least substantially parallel to sealing surfaces of the at least two sealing jaws 18c, 20c. The rotations axes 110c of the drive shafts 108c of the at least two drive units 42c, 44c run at least substantially perpendicularly to the horizontal movement axis 38c and the vertical movement axis 40c of the guide unit 82c. The rotation axes 110c of the drive shafts 108c of the at least two drive units 42c, 44c run at least substantially parallel to each other. Alternatively it is also conceivable that the rotation axes 110c of the drive shafts 108c of the at least two drive units 42c, 44c run transversely, preferably at least substantially perpendicularly, relative to each other. The drive shaft 108c of one drive unit 42c of the at least two drive units 42c, 44c is directly connected to one movement element 46c of the two movement elements 46c, 48c and to one movement element 56c of the at least two further movement elements 54c, 56c. A drive shaft 108c of a further drive unit 44c of the at least two drive units 42c, 44c is directly connected to a further movement element 48c of the at least two movement elements 46c, 48c and to a further movement element 54c of the at least two further movement elements 54c 56c.

The drive connection element 94c and the further drive connection element 106c can be driven to move translationally along a direction parallel to a translational movement axis of the drive connection element 94c and the further drive connection element 106c by the joint drive by means of the at least two drive units 42c, 44c in order to generate a vertical movement of the at least two sealing jaws 42c, 44c, in particular relative to the frame of the transverse sealing device 14c. The translational movement axis of the drive connection element 94c and the further drive connection element 106c runs transversely, particularly preferably at least substantially perpendicularly, to the rotation axis 104c of the drive connection element 94c. The translational movement axis runs preferably at least substantially parallel to the vertical movement axis 40c of the guide unit 82c and/or the sealing surfaces of the at least two sealing jaws 18c, 20c. The translational movement axis runs at least substantially perpendicularly to the horizontal movement axis 40c of the guide unit 82c.

A vertical movement of the at least two sealing jaws 18c, 20c is generatable by a parallel drive of the movement unit 36c by means of the at least two drive units 42c, 44c. A vertical movement of the at least two sealing jaws 18c, 20c is generatable by a parallel drive of the drive connection element 94c and the further drive connection element 106c by means of the at least two drive units 42c, 44c. A parallel drive of the drive connection element 94c and the further drive connection element 106c by the at least two drive units 42c, 44c shall be understood to mean that the movements transmitted to the drive connection element 94c and the further drive connection element 106c, which are generatable by the at least two drive units 42c, 44c, coincide at least in their direction and in their velocity. The components of the crank slider mechanism 100c are, via a parallel drive of the movement unit 36c by means of the at least two drive units 42c, 44c, moved as a whole merely translationally in order to generate a vertical movement of the at least two sealing jaws 18c, 20c. Drive directions of the at least two drive units 42c, 44c for generating a parallel drive of the movement unit 36c, in particular the drive connection element 94c and the further drive connection element 106c, are oriented opposite to each other. Alternatively it is also conceivable that the drive directions of the at least two drive units 42c, 44c coincide in order to generate a parallel drive of the movement unit 36c, in particular the drive connection element 94c and the further drive connection element 106c. It is conceivable that absolute values of drive speeds of the at least two drive units 42c, 44c coincide with or differ from each other for generating a parallel drive of the movement unit 36c, in particular the drive connection element 94c and the further drive connection element 106c, preferably depending on the arrangement of the at least two drive units 42c, 44c relative to each other and/or the arrangement of the movement unit 36c. The drive directions of the at least two drive units 42c, 44c depend on the arrangement of the at least two drive units 42c, 44c relative to each other and/or the arrangement of the movement unit 36c. Alternatively, it is also possible that the two drive units 42c, 44c are arranged and/or implemented in such a way that a parallel drive of the movement unit 36c is generatable by a synchronous operation of the at least two drive units 42c, 44c. The movement unit 36c is arranged in such a way that a parallel drive of the movement unit 36c, in particular the drive connection element 94c and the further drive connection element 106c, generates a translational movement of the drive connection element 94c and the further drive connection element 106c along the direction parallel to the translational movement axis of the drive connection element 94c and the further drive connection element 106c for the purpose of generating a vertical movement of the at least two sealing jaws 18c, 20c, in particular relative to the frame of the transverse sealing device 14c.

A horizontal movement of the at least two sealing jaws 18c, 20c relative to each other is generatable by a non-parallel drive of the movement unit 36c by means of the at least two drive units 42c, 44c. A non-parallel drive of the drive connection element 94c and the further drive connection element 106c by the at least two drive units 42c, 44c is to mean that the movements transmitted to the drive connection element 94c and the further drive connection element 106c, which are generatable by the at least two drive units 42c, 44c, differ at least in their directions. The directions of the movements, which are in particular generatable by means of the at least two drive units 42c, 44c, and are transmitted to the drive connection element 94c and the further drive connection element 106c in the case of a non-parallel drive of the drive connection element 94c and the further drive connection element 106c, are oriented opposite to one another. The movements transmitted to the drive connection element 94c and the further drive connection element 106c by a non-parallel drive of the movement unit 36c, in particular the drive connection element 94c and the further drive connection element 106c, by means of the at least two drive units 42c, 44c coincide at least in a direction and in a velocity. The crank slider mechanism 100c is connected to the at least two drive units 42c, 44c in such a way that by a non-parallel drive of the movement unit 36c by means of the at least two drive units 42c, 44c, the crank slider mechanism 100c is configured to generate a horizontal movement of the at least two sealing jaws 18c, 20c. A horizontal movement of the at least two sealing jaws 18c, 20c, in particular relative to the frame of the transverse sealing device 14c, is generatable by a non-parallel drive of the drive connection element 94c and the further drive connection element 106c by means of the at least two drive units 42c, 44c. It is conceivable that a non-parallel drive of the movement unit 36c, in particular the drive connection element 94c and the further drive connection element 106c, is generatable by an asynchronous operation of the at least two drive units 42c, 44c. The drive directions of the at least two drive units 42c, 44c in this exemplary embodiment coincide for generating a non-parallel drive of the movement unit 36c, preferably the drive connection element 94c and the further drive connection element 106c. The movement unit 36c is arranged in such a way that a non-parallel drive of the movement unit 36c, in particular the drive connection element 94c and the further drive connection element 106c, generates a rotational movement of the drive connection element 94c and the further drive connection element 106c around the rotation axes 104c of the drive connection element 94c and the further drive connection element 106c, in particular in order to generate a horizontal movement of the at least two sealing jaws 18c, 20c. It is conceivable that the absolute values of the drive speeds of the at least two drive units 42c, 44c coincide with or differ from each other in order to generate a parallel drive of the movement unit 36c, in particular the drive connection element 94c and the further drive connection element 106c, preferably depending on the arrangement of the at least two drive units 42c, 44c relative to each other and/or the arrangement of the movement unit 36c. Alternatively it is also conceivable that the drive directions of the at least two drive units 42c, 44c differ from each other, preferably are oriented opposite to each other, for the purpose of generating a non-parallel drive of the movement unit 36c, in particular the drive connection element 94c and the further drive connection element 106c.

The two movement elements 46c, 48c are movably, in particular rotatably, connected to each other. One drive unit 42c of the at least two drive units 42c, 44c is mechanically connected to one movement element 46c of the at least two movement elements 46c, 48c for driving the movement element 46c. A further drive unit 44c of the at least two drive units 42c, 44c is mechanically connected to a further movement element 48c of the at least two movement elements 46c, 48c for driving the further movement element 48c. The two movement elements 46c, 48c and the further two movement elements 54c, 56c are each movably, in particular rotatably, connected to one of the drive shafts 108c of the at least two drive units 42c, 44c, in particular via link arms 112c of the at least two drive units 42c, 44c, which are preferably arranged on the drive shafts 108c of the two drive units 42c, 44c in a fixed position relative to the respective drive shaft 108c.

The movement unit 36c is arranged at least substantially completely sideways relative to the at least two sealing jaws 18c, 20c, at least viewed in a direction parallel to the horizontal movement axis 38c of the guide unit 82c. The movement unit 36c is arranged sideways relative to the at least two sealing jaws 18c, 20c in such a way that the movement unit 36c is positioned at least substantially completely within a proximity area of the at least two sealing jaws 18c, 20c, at least viewed in the direction parallel to the horizontal movement axis 38c of the guide unit 82c. The at least two sealing jaws 18c, 20c are pullable into a sealing position by means of the movement unit 36c.

Figure 8 shows schematically a flow chart of a method for operating the transverse sealing device. In a process step 58c the at least two sealing jaws 18c, 20c of the transverse sealing device 14c are moved translationally along the direction parallel to the horizontal movement axis 18c and/or the vertical movement axis 40c of the guide unit 82c by the joint drive of the movement unit 36c of the transverse sealing device 14c by means of the at least two drive units 42c, 44c of the transverse sealing device 14c. The horizontal movement and/or the vertical movement of the at least two sealing jaws 18c, 20c are/is generated by a drive executed by all of the at least two drive units 42c, 44c. In the process step 58c a power generated by the at least two drive units 42c, 44c is transmitted by means of the movement unit 36c to the at least two sealing jaws 18c, 20c in order to generate a horizontal movement of the at least two sealing jaws 18c, 20c relative to each other and/or to generate a vertical movement of the at least two sealing jaws 18c, 20c, in particular relative to the frame of the transverse sealing device 14c. It is conceivable that in the process step 58c the movement unit 36c is driven by the joint drive by means of the at least two drive units 42c, 44c in such a way that only a horizontal movement or a vertical movement of the at least two sealing jaws 18c, 20c is generated. In the process step 58c the drive connection element 94c and the further drive connection element 106c are driven to rotate around the rotation axes 104c of the drive connection element 94c and the further drive connection element 106c by the joint drive by means of the at least two drive units 42c, 44c for the purpose of generating a horizontal movement of the at least two sealing jaws 18c, 20c. Alternatively, it is also conceivable that in the process step 58c the drive connection element 94c and the further drive connection element 106c are driven to rotate around the rotation axes 104c of the drive connection element 94c and the further drive connection element 106c by the joint drive by means of the at least two drive units 42c, 44c for the purpose of generating a vertical movement of the at least two sealing jaws 18c, 20c. In the process step 58c the drive connection element 94c and the further drive connection element 106c are driven to move translationally along the direction parallel to the translationally movement axis of the drive connection element 94c and the further drive connection element 106c by the joint drive by means of the at least two drive units 42c, 44c for the purpose of generating a vertical movement of the at least two sealing jaws 18c, 20c. In the process step 58c a drive force generated by the at least two drive units 42c, 44c, in particular a movement of the drive connection element 94c and the further drive connection element 106c, is converted by the crank slider mechanism 100c into a horizontal and/or vertical movement of the at least two sealing jaws 18c, 20c.

In the process step 58c the movement unit 36c, in particular the at least two movement elements 46c, 48c of the movement unit 36c, is driven in parallel by the at least two drive units 42c, 44c in order to generate a vertical movement of the at least two sealing jaws 18c, 20c. In the process step 58c the vertical movement of the at least two sealing jaws 18c, 20c is generated by a parallel drive of the drive connection element 94c and the further drive connection element 106c by means of the at least two drive units 42c, 44c. In the process step 58c the movement unit 36c, in particular the at least two movement elements 46c, 48c of the movement unit 36c, is driven in opposite directions by the at least two drive units 42c, 44c in order to generate a horizontal movement of the at least two sealing jaws 18c, 20c. In the process step 58c a horizontal movement of the at least two sealing jaws 18c, 20c is generated by a non-parallel drive of the drive connection element 94c and the further drive connection element 106c by means of the at least two drive units 42c, 44c. In a further process step 114c a packaging material is sealed by the at least two sealing jaws 18c, 20c.

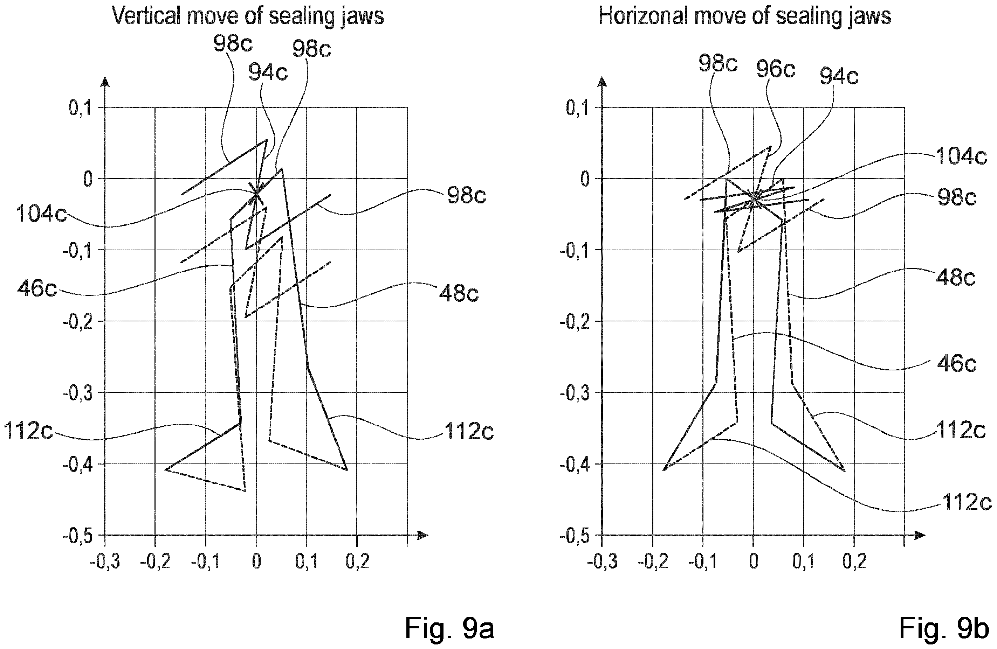

Figure 9a schematically shows the movement unit 36c in two different vertical positions of the at least two sealing jaws 18c, 20c. The movement unit 36c shown in dashed lines is an arrangement of the movement unit 36c in a first vertical position of the at least two sealing jaws 18c, 20c. The movement unit 36c shown in continuous lines is an arrangement of the movement element 36c in a second vertical position of the at least two sealing jaws 18c, 20c. A relative arrangement of the two slider elements 98c, the additional movement element 96c and the drive connection element 94c of the movement unit 36c is fixed during a merely vertical movement of the at least two sealing jaws 18c, 20c.

Figure 9b schematically shows the movement unit 36c in two different horizontal positions of the at least two sealing jaws 18c, 20c relative to each other. The movement unit 36c shown in dashed lines is an arrangement of the movement unit 36c in a first horizontal position of the at least two sealing jaws 18c, 20c. The movement unit 36c shown in continuous lines is an arrangement of the movement element 36c in a second horizontal position of the at least two sealing jaws 18c, 20c, in particular in the sealing position. A relative arrangement of the two slider elements 98c, the additional movement element 96c and the drive connection element 94c of the movement unit 36c is changed during a horizontal movement of the at least two sealing jaws 18c, 20c relative to each other.

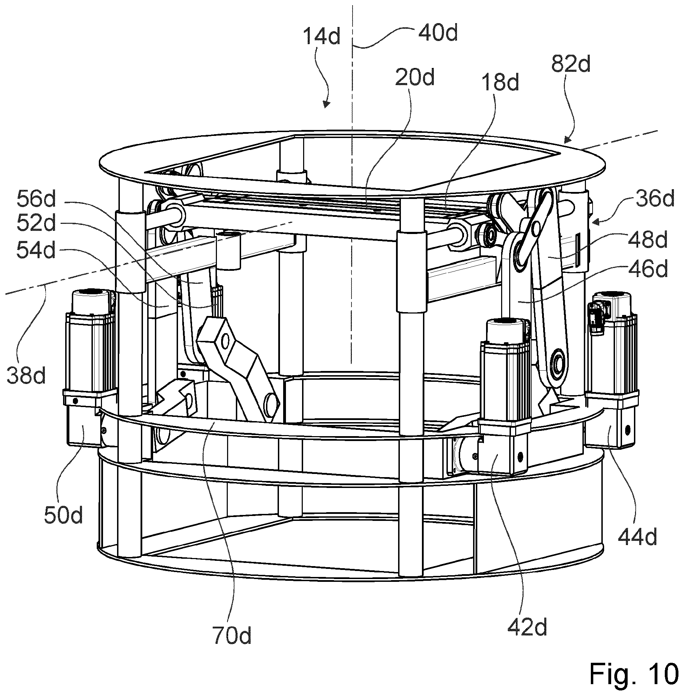

In figure 10 a transverse sealing device 14d is shown for a sealing of a package or a packaging material. The transverse sealing device 14d comprises at least two sealing jaws 18d, 20d. The transverse sealing device 14d comprises at least one movement unit 36d, which is configured for moving the at least two sealing jaws 18d, 20d translationally relative to each other along a direction parallel to a horizontal movement axis 38d of a guide unit 82d of the transverse sealing device 14d and for moving the at least two sealing jaws 18d, 20d translationally along a direction parallel to a vertical movement axis 40d of the guide unit 82d.

The movement unit 36d comprises at least four movement elements 46d, 48d, 54d, 56d. Each of four drive units 42d, 44d, 50d, 52d is mechanically connected to one of the four movement elements 46d, 48d, 54d, 56d for driving the four movement elements 46d, 48d, 54d, 56d so as to generate a vertical and/or horizontal movement of the at least two sealing jaws 18d, 20d. The at least four movement elements 46d, 48d, 54d, 56d correspond to the at least two movement elements 46c, 48c and the at least two further movement elements 54c, 56c of the embodiment of figures 6 to 8. The four movement elements 46d, 48d, 54d, 56d are free from any direct connection to each other, in particular via a drive shaft, or the like. The four drive units 42d, 44d, 50d, 52d are arranged in an at least substantially positionally fixed manner relative to a frame 70d of the transverse sealing device 14d. The movement unit 36d is arranged at least substantially completely sideways relative to the at least two sealing jaws 18d, 20d, at least viewed in a direction parallel to the horizontal movement axis 38d of the guide unit 82d. The movement unit 36d is arranged sideways relative to the at least two sealing jaws 18d, 20d in such a way that the movement unit 36c is positioned at least substantially completely within a proximity area of the at least two sealing jaws 18d, 20d, at least viewed in the direction parallel to the horizontal movement axis 38d of the guide unit 82d. The at least two sealing jaws 18d, 20d are pullable into a sealing position by means of the movement unit 36d.

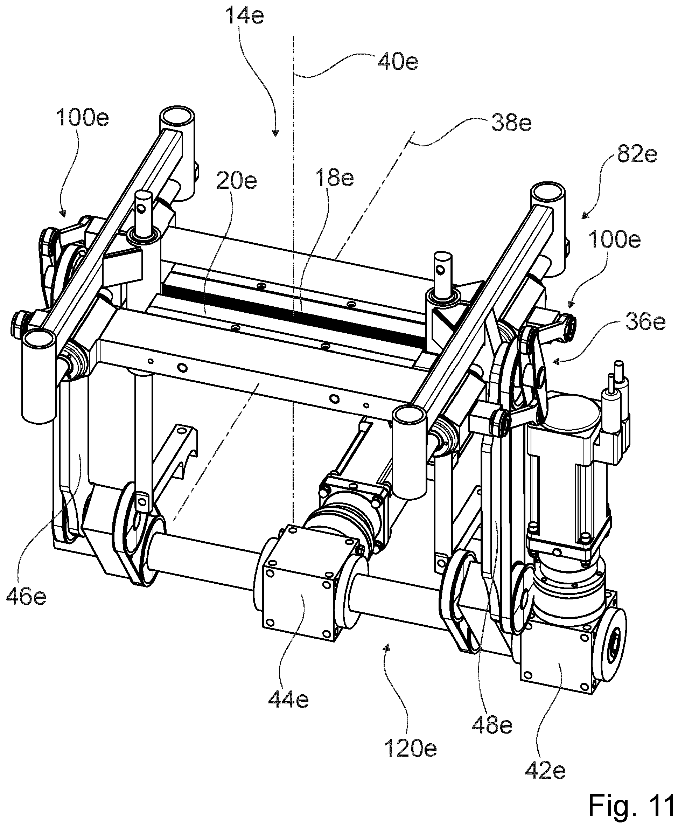

In figure 11 a transverse sealing device 14e is shown for a sealing of a package or a packaging material. The transverse sealing device 14e comprises at least two sealing jaws 18e, 20e. The transverse sealing device 14e comprises at least one movement unit 36e, which is configured for moving the at least two sealing jaws 18e, 20e translationally relative to each other along a direction parallel to a horizontal movement axis 38e of a guide unit 82e of the transverse sealing device 14e and for moving the at least two sealing jaws 18e, 20e translationally along a direction parallel to a vertical movement axis 40e of the guide unit 82e, in particular relative to a frame (not shown here) of the transverse sealing device 14e.

The movement unit 36e comprises at least two crank slider mechanisms 100e, which are in particular arranged on averted sides of the at least two sealing jaws 18e, 20e. The movement unit 36e comprises a belt construction 120e for transmitting a driving force generatable by a drive unit 44e of the transverse sealing device 14e to the two crank slider mechanisms 100e in order to generate a horizontal movement of the at least two sealing jaws 18e, 20e relative to each other. The transverse sealing device 14e comprises a further drive unit 44e for generating a vertical movement of the at least two sealing jaws 18e, 20e, in particular relative to the frame. The movement unit 36e comprises two movement elements 46e, 48e, implemented as arms, for converting the driving force of the further drive unit 42e into a vertical movement of the at least two sealing jaws 18e, 20e.

The movement unit 36e is arranged at least substantially completely sideways relative to the at least two sealing jaws 18e, 20e, at least viewed in a direction parallel to the horizontal movement axis 38e of the guide unit 82e. The movement unit 36e is arranged sideways relative to the at least two sealing jaws 18e, 20e in such a way that the movement unit 36e is positioned at least substantially completely within a proximity area of the at least two sealing jaws 18e, 20e, at least viewed in the direction parallel to the horizontal movement axis 38e of the guide unit 82e. The at least two sealing jaws 18e, 20e are pullable into a sealing position by means of the movement unit 36e. The drive unit 44e and the further drive unit 42e are arranged in an at least substantially positionally fixed manner relative to the frame of the transverse sealing device 14e.

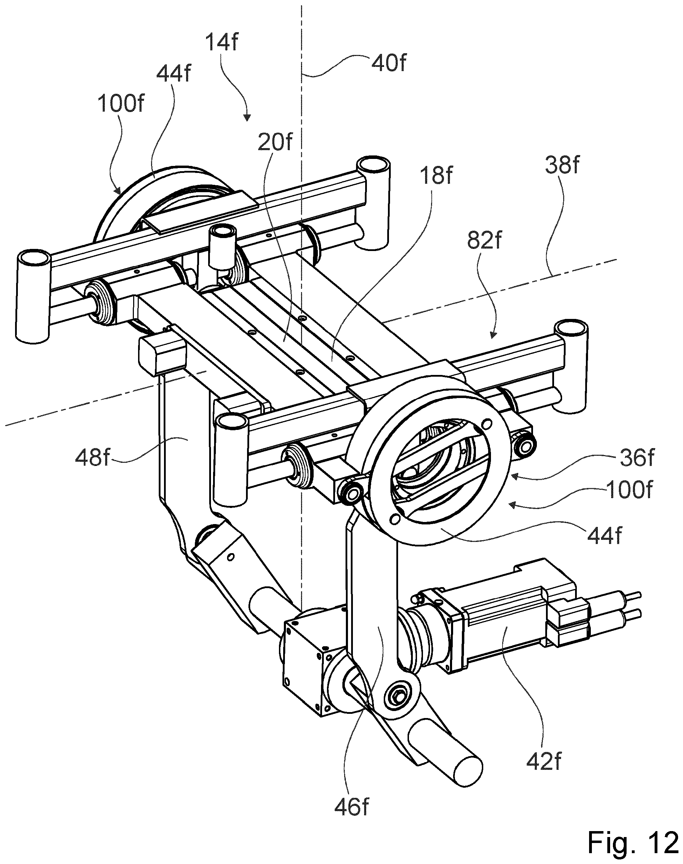

In figure 12 a transverse sealing device 14f is shown for a sealing of a package or a packaging material. The transverse sealing device 14f comprises at least two sealing jaws 18f, 20f. The transverse sealing device 14f comprises at least one movement unit 36f, which is configured for moving the at least two sealing jaws 18f, 20f translationally relative to each other along a direction parallel to a horizontal movement axis 38f of a guide unit 82f of the transverse sealing device 14f and for moving the at least two sealing jaws 18f, 20f translationally along a direction parallel to a vertical movement axis 40f of the guide unit 82f, in particular relative to a frame (not shown here) of the transverse sealing device 14f.

The movement unit 36f comprises at least two crank slider mechanisms 100f, which are in particular arranged on averted sides of the at least two sealing jaws 18f, 20f. The transverse sealing device 14f comprises two drive units 44f, wherein one of the two drive units 44f is arranged at one of the two crank slider mechanisms 100f. The two drive units 44f are configured for driving the two crank slider mechanisms 100f in order to generate a horizontal movement of the at least two sealing jaws 18f, 20f relative to each other. The two drive units 44f are attached to the two sealing jaws 18f, 20f in such a way that the at least two drive units 44f are moved along a direction parallel to a vertical movement axis of the at least two sealing jaws 18f, 20f relative to the frame. The transverse sealing device 14f comprises at least one further drive unit 42f for generating a driving force in order to move the at least two sealing jaws 18f, 20f along a direction parallel to the vertical movement axis 40f. The further drive unit 42f is arranged in an at least substantially positionally fixed manner relative to the frame. The movement unit 36f comprises two movement elements 46f, 48f configured for converting a driving force of the further drive unit 42f into a vertical movement of the at least two sealing jaws 18f, 20f.

The movement unit 36f is arranged at least substantially completely sideways relative to the at least two sealing jaws 18f, 20f, at least viewed in a direction parallel to the horizontal movement axis 38f of the guide unit 82f. The movement unit 36f is arranged sideways relative to the at least two sealing jaws 18f, 20f in such a way that the movement unit 36f is positioned at least substantially completely within a horizontal movement area of the guide unit 82e, at least viewed in the direction parallel to the horizontal movement axis 38f of the guide unit 82f. The at least two sealing jaws 18f, 20f are pullable into a sealing position by means of the movement unit 36f.

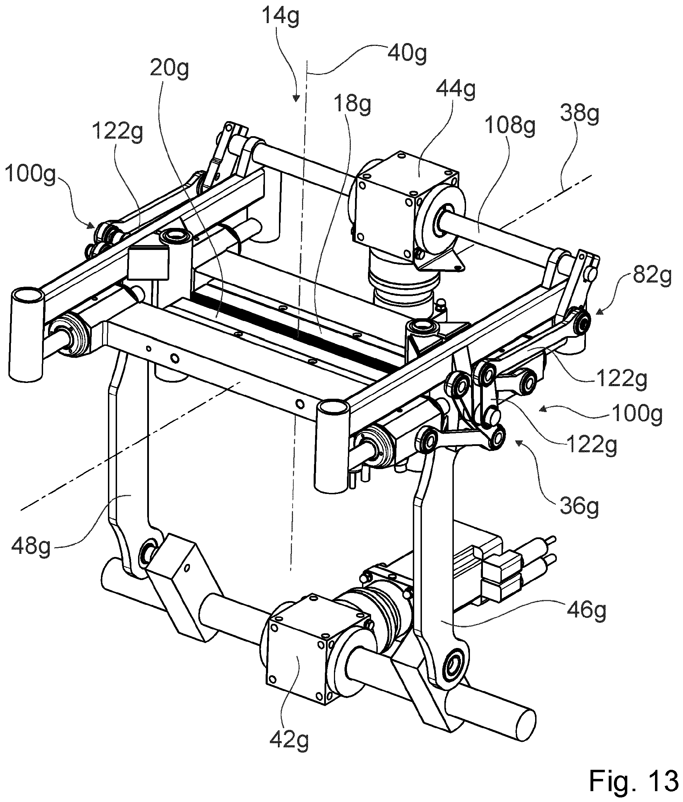

In figure 13 a transverse sealing device 14g is shown for a sealing of a package or a packaging material. The transverse sealing device 14g comprises at least two sealing jaws 18g, 20g. The transverse sealing device 14g comprises at least one movement unit 36g, which is configured for movingthe at least two sealing jaws 18g, 20g translationally relative to each other along a direction parallel to a horizontal movement axis 38g of a guide unit 82g of the transverse sealing device 14g and for moving the at least two sealing jaws 18g, 20g translationally along a direction parallel to a vertical movement axis 40g of the guide unit 82g, in particular relative to a frame (not shown here) of the transverse sealing device 14g.

The movement unit 36g comprises at least two crank slider mechanisms 100g, which are in particular arranged on averted sides of the at least two sealing jaws 18g, 20g. The transverse sealing device 14g comprises a drive unit 44g for generating a driving force so as to move the at least two sealing jaws 18g, 20g horizontally. The drive unit 44g is arranged relative to the two sealing jaws 18g, 20g in such a way that the drive unit 44g is moved along with a vertical movement of the at least two sealing jaws 18g, 20g relative to the frame. The transverse sealing device 14g comprises at least one further drive unit 42g for generating a driving force so as to move the at least two sealing jaws 18g, 20g along the direction parallel to the vertical movement axis 40g. The further drive unit 42g is arranged in an at least substantially positionally fixed manner relative to the frame. The movement unit 36g comprises two movement elements 46g, 48g for converting a driving force of the further drive unit 42g into a vertical movement of the at least two sealing jaws 18g, 20g. The drive unit 44g comprises at least one drive shaft 108g, which is connected to the two crank slider mechanisms 100g, in particular via additional movement elements 122g of the movement unit 36g.

The movement unit 36g is arranged at least substantially completely sideways relative to the at least two sealing jaws 18g, 20g, at least viewed in a direction parallel to the horizontal movement axis 38g of the guide unit 82g. The movement unit 36g is arranged sideways relative to the at least two sealing jaws 18g, 20g in such a way that the movement unit 36g is positioned at least substantially completely within a proximity area of the at least two sealing jaws 18g, 20g, at least viewed in the direction parallel to the horizontal movement axis 38g of the guide unit 82g. The at least two sealing jaws 18g, 20g are pullable into a sealing position by means of the movement unit 36g.

## Claims

1. Transverse sealing device (14a -14g) for sealing a package or a packaging material, comprising at least two sealing jaws (18a - 18g, 20a - 20g), comprising at least one movement unit (36a - 36g), which is configured for moving the at least two sealing jaws (18a - 18g, 20a - 20gl) horizontally relative to each other and comprising a guide unit (82a - 82g) to guide the at least two sealing jaws (18a - 18g, 20a - 20g) during a movement, wherein the movement unit (36a - 36g) is arranged at least substantially completely sideways relative to the at least two sealing jaws (18a - 18g, 20a - 20g), at least viewed in a direction parallel to a horizontal movement axis (38a - 38g) of the guide unit (82a - 82g), wherein at least 75% of a total volume and/or a total mass of the movement unit (36a - 36g) are arranged sideways relative to the at least two sealing jaws (18a - 18g, 20a - 20g), wherein the at least two sealing jaws (18a - 18g, 20a - 20g) are linearly movably supported along the direction parallel to the horizontal movement axis (38a - 38g) of the guide unit (82a - 82g), **characterized in that** the at least two sealing jaws (18a - 18g, 20a - 20g) are pullable into a sealing position by means of the movement unit (36a - 36g), wherein the movement unit (36a - 36g) is connected to the at least two sealing jaws (18a - 18g, 20a - 20g) in such a way that the movement unit (36a - 36g) is enabled to generate a direct pulling force for pulling the at least two sealing jaws (18a - 18g, 20a - 20g) relative to each other into the sealing position, wherein at least one movement element (46a - 46g) and at least one further movement element (48a - 48g) of the movement unit (36a - 36g) are movable relative to each other so as to pull the at least two sealing jaws (18a - 18g, 20a - 20g) towards each other into the sealing position.

2. Transverse sealing device (14a -14g) according to claim 1, **characterized in that** the movement unit (36a - 36g) is arranged sideways relative to the at least two sealing jaws (18a - 18g, 20a - 20g) in such a way that the movement unit (36a - 36g) is positioned at least substantially completely within a proximity area of the at least two sealing jaws (18a - 18g, 20a - 20g), at least viewed in the direction parallel to the horizontal movement axis (38a - 38g) of the guide unit (82a - 82g), wherein the movement unit (36a - 36g) is arranged sideways relative to the at least two sealing jaws (18a - 18g, 20a - 20g) in such a way that at least 75% of a total volume and/or a total mass of the movement unit (36a - 36g) are arranged sideways relative to the at least two sealing jaws (18a - 18g, 20a - 20g) within the proximity area of the at least two sealing jaws (18a - 18g, 20a - 20g).

3. Transverse sealing device (14a -14l) according to claim 1 or 2, **characterized in that** the movement unit (36a) comprises at least one torque resistant linear bushing (62a, 68a) and at least one movement element (46a, 48a, 54a, 56a), in particular a mechanical connection element, which is movably connected to one sealing jaw (18a, 20a) of the at least two sealing jaws (18a, 20a) and to the at least one torque resistant linear bushing (62a, 68a), wherein the torque resistant linear bushing (62a, 68a) is configured to transmit a driving force, in particular from a drive unit (44a), to the at least one movement element (46a, 48a, 54a, 56a) for moving the at least two sealing jaws (18a, 20a) relative to each other along the horizontal movement axis (38a).

4. Transverse sealing device (14a -14l) according to claim 3, **characterized in that** the guide unit (82a) comprises at least one guide element (64a, 74a), in particular a guide rod, to which the at least one torque resistant linear bushing (62a, 68a) is movably connected, and at least one drive unit (44a), which is configured to drive the at least one guide element (64a, 74a) of the guide unit (82a) to rotate about a rotation axis (66a) of the at least one guide element (64a, 74a) of the guide unit (82a) to generate a movement of the two sealing jaws (18a, 20a) relative to each other.

5. Transverse sealing device (14a -14l) according to one of the preceding claims, **characterized in that** the movement unit (36a) comprises at least two torque resistant linear bushings (62a, 68a), which are configured to transmit a driving force, in particular from at least one drive unit (44a), for moving the at least two sealing jaws (18a, 20a) relative to each other in a direction parallel to the horizontal movement axis (38a), wherein on each side of the at least two sealing jaws (18a, 20a) one of the two torque resistant linear bushings (62a, 68a) is arranged, at least viewed in the direction parallel to the horizontal movement axis (38) of the guide unit (82a).

6. Transverse sealing device (14a -14l) according to one of the preceding claims, **characterized in that** the guide unit (82a) comprises at least one guide element (64a, 74a), in particular a guide rod, wherein the movement unit (36a) comprises at least one torque resistant linear bushing (62a, 68a), which can be moved along the at least one guide element (64a, 74a) of the guide unit (82a) for a vertical movement of the at least two sealing jaws (18a, 20a).

7. Transverse sealing device (14a -14g) according to one of the preceding claims, **characterized by** a frame (70a - 70g) and at least one drive unit (42a - 42g) to provide a driving force for generating a vertical movement of the at least two sealing jaws (18a - 18g, 20a -20g) relative to the frame (70a - 70g), wherein the drive unit (42a - 42g) to provide the driving force for generating the vertical movement of the at least two sealing jaws (18a - 18g, 20a - 20g) is arranged in an at least substantially positionally fixed manner relative to the frame (70a - 70g), wherein the drive unit (42a - 42g) is free from any movement relative to the frame (70a - 70g) other than a movement of mechanical components of the drive unit (42a - 42g) which inevitably move during operation of the drive unit (42a - 42g).

8. Transverse sealing device (14a -14e) according to one of the preceding claims, **characterized by** a frame (70a - 70e) and at least one drive unit (44a - 44e) for driving the movement unit (36a - 36e) so as to generate a horizontal movement of the at least two sealing jaws (18a - 18e, 20a - 20e) relative to each other in a direction parallel to the horizontal movement axis (38a - 38e) by means of the movement unit (36a - 36e), wherein the drive unit (44a - 44e) to drive the movement unit (36a - 36e) to generate the horizontal movement of the at least two sealing jaws (18a - 18e, 20a - 20e) is arranged in an at least substantially positionally fixed manner relative to the frame (70a - 70e), wherein the drive unit (42a - 42g) is free from any movement relative to the frame (70a - 70g) other than a movement of mechanical components of the drive unit (42a - 42g) which inevitably move during operation of the drive unit (42a - 42g).

9. Method for operating a transverse sealing device (14a -14l) for sealing a package or a packaging material, in particular a transverse sealing device (14a -14l) according to one of the preceding claims, **characterized in that** in one process step (72a - 72g) two sealing jaws (18a - 18g) of the transverse sealing device (14a -14g) are pulled into a sealing position by means of a movement unit (36a - 36g) of the transverse sealing device (14a -14g), wherein the movement unit (36a - 36g) is connected to the at least two sealing jaws (18a - 18g, 20a - 20g) in such a way that the movement unit (36a - 36g) generates a direct pulling force which pulled the at least two sealing jaws (18a - 18g, 20a - 20g) relative to each other into the sealing position, wherein the at least two sealing jaws (18a - 18g, 20a - 20g) are linearly moved along a direction parallel to a horizontal movement axis (38a - 38g) of a guide unit (82a - 82g) of the transverse sealing device (14a - 14g), wherein at least one movement element (46a - 46g) and at least one further movement element (48a - 48g) of the movement unit (36a - 36g) are moved relative to each other to pull the at least two sealing jaws (18a - 18g, 20a - 20g) towards each other into the sealing position.

10. Method according to claim 9, **characterized in that** in one process step (72a) a drive torque for moving the at least two sealing jaws (18a, 20a) relative to each other along a horizontal movement axis (38a) of a guide unit (82a) of the transverse sealing device (14a) is transmitted by at least one torque resistant linear bushing (62a) of the movement unit (36a).

11. Vertical form fill sealing machine (10a - 10l) comprising a machine frame (12a - 12l) and at least one transverse sealing device (14a -14l) for sealing a packaging material transversely according to one of the claims 1 to 8.

## Patentansprüche

1. Querversiegelungsvorrichtung (14a - 14g) zum Versiegeln einer Verpackung oder eines Verpackungsmaterials, umfassend mindestens zwei Versiegelungsbacken (18a - 18 g, 20a - 20g), umfassend mindestens eine Bewegungseinheit (36a - 36g), die zum horizontalen Bewegen der mindestens zwei Versiegelungsbacken (18a - 18 g, 20a - 20g) relativ zueinander konfiguriert ist, und umfassend eine Führungseinheit (82a - 82g), um die mindestens zwei Versiegelungsbacken (18a - 18 g, 20a - 20g) während einer Bewegung zu führen, wobei die Bewegungseinheit (36a - 36g) mindestens im Wesentlichen vollständig seitlich relativ zu den mindestens zwei Versiegelungsbacken (18a - 18 g, 20a - 20g), mindestens in einer Richtung parallel zu einer horizontalen Bewegungsachse (38a - 38g) der Führungseinheit (82a - 82g) betrachtet, angeordnet ist, wobei mindestens 75 % eines Gesamtvolumens und/oder einer Gesamtmasse der Bewegungseinheit (36a - 36g) seitlich relativ zu den mindestens zwei Versiegelungsbacken (18a - 18 g, 20a - 20g) angeordnet sind, wobei die mindestens zwei Versiegelungsbacken (18a - 18 g, 20a - 20g) entlang der Richtung parallel zu der horizontalen Bewegungsachse (38a - 38g) der Führungseinheit (82a - 82g) linear beweglich gelagert sind,
**dadurch gekennzeichnet, dass** die mindestens zwei Versiegelungsbacken (18a - 18 g, 20a - 20g) in eine Versiegelungsposition mittels der Bewegungseinheit (36a - 36g) ziehbar sind, wobei die Bewegungseinheit (36a - 36g) derart mit den mindestens zwei Versiegelungsbacken (18a - 18 g, 20a - 20g) verbunden ist, dass die Bewegungseinheit (36a - 36g) in der Lage ist, eine direkte Zugkraft zum Ziehen der mindestens zwei Versiegelungsbacken (18a - 18 g, 20a - 20g) relativ zueinander in die Versiegelungsposition zu erzeugen, wobei mindestens ein Bewegungselement (46a - 46g) und mindestens ein weiteres Bewegungselement (48a - 48g) der Bewegungseinheit (36a - 36g) relativ zueinander beweglich sind, um die mindestens zwei Versiegelungsbacken (18a - 18 g, 20a - 20g) zueinander hin in die Versiegelungsposition zu ziehen.

2. Querversiegelungsvorrichtung (14a - 14g) nach Anspruch 1,
**dadurch gekennzeichnet, dass** die Bewegungseinheit (36a - 36g) derart seitlich relativ zu den mindestens zwei Versiegelungsbacken (18a - 18 g, 20a - 20g) angeordnet ist, dass die Bewegungseinheit (36a - 36g) mindestens im Wesentlichen vollständig innerhalb eines Nahbereichs der mindestens zwei Versiegelungsbacken (18a - 18 g, 20a - 20g), mindestens in der Richtung parallel zu der horizontalen Bewegungsachse (38a - 38g) der Führungseinheit (82a - 82g) betrachtet, positioniert ist, wobei die Bewegungseinheit (36a - 36g) derart seitlich relativ zu den mindestens zwei Versiegelungsbacken (18a - 18 g, 20a - 20g) angeordnet ist, dass mindestens 75 % eines Gesamtvolumens und/oder einer Gesamtmasse der Bewegungseinheit (36a - 36g) seitlich relativ zu den mindestens zwei Versiegelungsbacken (18a - 18 g, 20a - 20g) innerhalb des Nahbereichs der mindestens zwei Versiegelungsbacken (18a - 18 g, 20a - 20g) angeordnet sind.

3. Querversiegelungsvorrichtung (14a -14l) nach Anspruch 1 oder 2, **dadurch gekennzeichnet, dass** die Bewegungseinheit (36a) mindestens eine drehmomentfeste Linearbuchse (62a, 68a) und mindestens ein Bewegungselement (46a, 48a, 54a, 56a), insbesondere ein mechanisches Verbindungselement, umfasst, das mit einer Versiegelungsbacke (18a, 20a) der mindestens zwei Versiegelungsbacken (18a, 20a) und mit der mindestens einen drehmomentfesten Linearbuchse (62a, 68a) beweglich verbunden ist, wobei die drehmomentfeste Linearbuchse (62a, 68a) dazu konfiguriert ist, um eine Antriebskraft, insbesondere von einer Antriebseinheit (44a), auf das mindestens eine Bewegungselement (46a, 48a, 54a, 56a) zu übertragen, um die mindestens zwei Versiegelungsbacken (18a, 20a) relativ zueinander entlang der horizontalen Bewegungsachse (38a) zu bewegen.

4. Querversiegelungsvorrichtung (14a -14l) nach Anspruch 3,
**dadurch gekennzeichnet, dass** die Führungseinheit (82a) mindestens ein Führungselement (64a, 74a), insbesondere eine Führungsstange, umfasst, mit dem die mindestens eine drehmomentfeste Linearbuchse (62a, 68a) beweglich verbunden ist, und mindestens eine Antriebseinheit (44a), die konfiguriert ist, um das mindestens eine Führungselement (64a, 74a) der Führungseinheit (82a) anzutreiben, um eine Drehachse (66a) des mindestens einen Führungselements (64a, 74a) der Führungseinheit (82a) zu drehen, um eine Bewegung der zwei Versiegelungsbacken (18a, 20a) relativ zueinander zu erzeugen.

5. Querversiegelungsvorrichtung (14a -14l) nach einem der vorstehenden Ansprüche, **dadurch gekennzeichnet, dass** die Bewegungseinheit (36a) mindestens zwei drehmomentfeste Linearbuchsen (62a, 68a) umfasst, die konfiguriert sind, um eine Antriebskraft, insbesondere von mindestens einer Antriebseinheit (44a), zum Bewegen der mindestens zwei Versiegelungsbacken (18a, 20a) relativ zueinander in einer Richtung parallel zu der horizontalen Bewegungsachse (38a), zu übertragen, wobei auf jeder Seite der mindestens zwei Versiegelungsbacken (18a, 20a) eine der zwei drehmomentfesten Linearbuchsen (62a, 68a), mindestens in der Richtung parallel zu der horizontalen Bewegungsachse (38) der Führungseinheit (82a) betrachtet, angeordnet ist.

6. Querversiegelungsvorrichtung (14a -14l) nach einem der vorstehenden Ansprüche, **dadurch gekennzeichnet, dass** die Führungseinheit (82a) mindestens ein Führungselement (64a, 74a), insbesondere eine Führungsstange, umfasst, wobei die Bewegungseinheit (36a) mindestens eine drehmomentfeste Linearbuchse (62a, 68a) umfasst, die entlang des mindestens einen Führungselements (64a, 74a) der Führungseinheit (82a) für eine vertikale Bewegung der mindestens zwei Versiegelungsbacken (18a, 20a) beweglich ist.

7. Querversiegelungsvorrichtung (14a -14g) nach einem der vorstehenden Ansprüche, **gekennzeichnet durch,** einen Rahmen (70a - 70g) und mindestens eine Antriebseinheit (42a - 42g), um eine Antriebskraft zum Erzeugen einer vertikalen Bewegung der mindestens zwei Versiegelungsbacken (18a - 18 g, 20a - 20g) relativ zu dem Rahmen (70a - 70g) bereitzustellen, wobei die Antriebseinheit (42a - 42g), um die Antriebskraft zum Erzeugen der vertikalen Bewegung der mindestens zwei Versiegelungsbacken (18a - 18 g, 20a - 20g) bereitzustellen, mindestens im Wesentlichen auf eine positionsmäßig fixierte Weise relativ zu dem Rahmen (70a - 70g) angeordnet ist, wobei die Antriebseinheit (42a - 42g) frei von jeglicher beliebiger Bewegung relativ zu dem Rahmen (70a - 70g) ist, mit Ausnahme einer Bewegung mechanischer Komponenten der Antriebseinheit (42a - 42g), die sich während des Betriebs der Antriebseinheit (42a - 42g) unvermeidlich bewegen.

8. Quersiegelvorrichtung (14a -14e) nach einem der vorstehenden Ansprüche, **gekennzeichnet durch,** einen Rahmen (70a - 70e) und mindestens eine Antriebseinheit (44a - 44e) zum Antreiben der Bewegungseinheit (36a - 36e), um eine horizontale Bewegung der mindestens zwei Versiegelungsbacken (18a - 18e, 20a - 20e) relativ zueinander in einer Richtung parallel zu der horizontalen Bewegungsachse (38a - 38e) mittels der Bewegungseinheit (36a - 36e) zu erzeugen, wobei die Antriebseinheit (44a - 44e), um die Bewegungseinheit (36a - 36e) anzutreiben, um die horizontale Bewegung der mindestens zwei Versiegelungsbacken (18a - 18e, 20a - 20e) zu erzeugen, mindestens im Wesentlichen auf eine positionsmäßig fixierte Weise relativ zu dem Rahmen (70a - 70e) angeordnet ist, wobei die Antriebseinheit (42a - 42g) frei von jeglicher beliebiger Bewegung relativ zu dem Rahmen (70a - 70g) ist, mit Ausnahme einer Bewegung mechanischer Komponenten der Antriebseinheit (42a - 42g), die sich während des Betriebs der Antriebseinheit (42a - 42g) unvermeidlich bewegen.

9. Verfahren zum Betreiben einer Querversiegelungsvorrichtung (14a -14l) zum Versiegeln einer Verpackung oder eines Verpackungsmaterials, insbesondere einer Querversiegelungsvorrichtung (14a -14l) nach einem der vorstehenden Ansprüche, **dadurch gekennzeichnet, dass** in einem Verfahrensschritt (72a - 72g) zwei Versiegelungsbacken (18a - 18g) der Querversiegelungsvorrichtung (14a - 14g) in eine Versiegelungsposition mittels einer Bewegungseinheit (36a - 36g) der Querversiegelungsvorrichtung (14a - 14g) gezogen werden, wobei die Bewegungseinheit (36a - 36g) derart mit den mindestens zwei Versiegelungsbacken (18a - 18 g, 20a - 20g) verbunden ist, dass die Bewegungseinheit (36a - 36g) eine direkte Zugkraft erzeugt, die die mindestens zwei Versiegelungsbacken (18a - 18 g, 20a - 20g) relativ zueinander in die Versiegelungsposition zieht, wobei die mindestens zwei Versiegelungsbacken (18a - 18 g, 20a - 20g) entlang einer Richtung parallel zu einer horizontalen Bewegungsachse (38a - 38g) einer Führungseinheit (82a - 82g) der Querversiegelungsvorrichtung (14a - 14g) linear bewegt werden, wobei mindestens ein Bewegungselement (46a - 46g) und mindestens ein weiteres Bewegungselement (48a - 48g) der Bewegungseinheit (36a - 36g) relativ zueinander bewegt werden, um die mindestens zwei Versiegelungsbacken (18a - 18 g, 20a - 20g) zueinander hin in die Versiegelungsposition zu ziehen.

10. Verfahren nach Anspruch 9, **dadurch gekennzeichnet, dass** in einem Verfahrensschritt (72a) ein Antriebsdrehmoment zum Bewegen der mindestens zwei Versiegelungsbacken (18a, 20a) relativ zueinander entlang einer horizontalen Bewegungsachse (38a) einer Führungseinheit (82a) der Querversiegelungsvorrichtung (14a) durch mindestens eine drehmomentfeste Linearbuchse (62a) der Bewegungseinheit (36a) übertragen wird.

11. Vertikale formfüllende Versiegelungsmaschine (10a - 10l) umfassend einen Maschinenrahmen (12a - 121) und mindestens einer Querversiegelungsvorrichtung (14a -14l) zum Querversiegeln eines Verpackungsmaterials nach einem der Ansprüche 1 bis 8.

## Revendications

1. Dispositif de scellage transversal (14a à 14g) destiné à sceller un emballage ou un matériau d'emballage, comprenant au moins deux mâchoires de scellage (18a à 18g, 20a à 20g), comprenant au moins une unité de déplacement (36a à 36g), qui est conçue pour déplacer les au moins deux mâchoires de scellage (18a à 18g, 20a à 20g) horizontalement l'une par rapport à l'autre et comprenant une unité de guidage (82a à 82g) destinée à guider les au moins deux mâchoires de scellage (18a à 18g, 20a à 20g) pendant un déplacement, dans lequel l'unité de déplacement (36a à 36g) est disposée au moins sensiblement complètement latéralement par rapport aux au moins deux mâchoires de scellage (18a à 18g, 20a à 20g), au moins vu dans une direction parallèle à un axe de déplacement horizontal (38a à 38g) de l'unité de guidage (82a à 82g), dans lequel au moins 75 % d'un volume total et/ou d'une masse totale de l'unité de déplacement (36a à 36g) sont disposé(e)s latéralement par rapport aux au moins deux mâchoires de scellage (18a à 18g, 20a à 20g), dans lequel les au moins deux mâchoires de scellage (18a à 18g, 20a à 20g) sont soutenues de manière déplaçable linéairement le long de la direction parallèle à l'axe de déplacement horizontal (38a à 38g) de l'unité de guidage (82a à 82g), **caractérisé en ce que** les au moins deux mâchoires de scellage (18a à 18g, 20a à 20g) peuvent être tirées dans une position de scellage au moyen de l'unité de déplacement (36a à 36g), dans lequel l'unité de déplacement (36a à 36g) est reliée aux au moins deux mâchoires de scellage (18a à 18g, 20a à 20g) de telle sorte que l'unité de déplacement (36a à 36g) est capable de générer une force de traction directe destinée à tirer les au moins deux mâchoires de scellage (18a à 18g, 20a à 20g) l'une par rapport à l'autre dans la position de scellage, dans lequel au moins un élément de déplacement (46a à 46g) et au moins un autre élément de déplacement (48a à 48g) de l'unité de déplacement (36a à 36g) peuvent se déplacer l'un par rapport à l'autre de manière à tirer les au moins deux mâchoires de scellage (18a à 18g, 20a à 20g) l'une vers l'autre dans la position de scellage.

2. Dispositif de scellage transversal (14a à 14g) selon la revendication 1, **caractérisé en ce que** l'unité de déplacement (36a à 36g) est disposée latéralement par rapport aux au moins deux mâchoires de scellage (18a à 18g, 20a à 20g) de telle sorte que l'unité de déplacement (36a à 36g) est positionnée au moins sensiblement complètement à l'intérieur d'une zone de proximité des au moins deux mâchoires de scellage (18a à 18g, 20a à 20g), au moins vu dans la direction parallèle à l'axe de déplacement horizontal (38a à 38g) de l'unité de guidage (82a à 82g), dans lequel l'unité de déplacement (36a à 36g) est disposée latéralement par rapport aux au moins deux mâchoires de scellage (18a à 18g, 20a à 20g) de telle sorte qu'au moins 75 % d'un volume total et/ou d'une masse totale de l'unité de déplacement (36a à 36g) sont disposé(e)s latéralement par rapport aux au moins deux mâchoires de scellage (18a à 18g, 20a à 20g) à l'intérieur de la zone de proximité des au moins deux mâchoires de scellage (18a à 18g, 20a à 20g).

3. Dispositif de scellage transversal (14a à 14l) selon la revendication 1 ou 2, **caractérisé en ce que** l'unité de déplacement (36a) comprend au moins une douille linéaire résistante au couple (62a, 68a) et au moins un élément de déplacement (46a, 48a, 54a, 56a), en particulier un élément de liaison mécanique, qui est relié de manière déplaçable à une mâchoire de scellage (18a, 20a) des au moins deux mâchoires de scellage (18a, 20a) et à l'au moins une douille linéaire résistante au couple (62a, 68a), dans lequel la douille linéaire résistante au couple (62a, 68a) est conçue pour transmettre une force d'entraînement, en particulier provenant d'une unité d'entraînement (44a), à l'au moins un élément de déplacement (46a, 48a, 54a, 56a) afin de déplacer les au moins deux mâchoires de scellage (18a, 20a) l'une par rapport à l'autre le long de l'axe de déplacement horizontal (38a).

4. Dispositif de scellage transversal (14a à 14l) selon la revendication 3, **caractérisé en ce que** l'unité de guidage (82a) comprend au moins un élément de guidage (64a, 74a), en particulier une tige de guidage, auquel l'au moins une douille linéaire résistante au couple (62a, 68a) est reliée de manière déplaçable, et au moins une unité d'entraînement (44a), qui est conçue pour entraîner l'au moins un élément de guidage (64a, 74a) de l'unité de guidage (82a) en rotation autour d'un axe de rotation (66a) de l'au moins un élément de guidage (64a, 74a) de l'unité de guidage (82a) afin de générer un déplacement des deux mâchoires de scellage (18a, 20a) l'une par rapport à l'autre.

5. Dispositif de scellage transversal (14a à 14l) selon l'une des revendications précédentes, **caractérisé en ce que** l'unité de déplacement (36a) comprend au moins deux douilles linéaires résistantes au couple (62a, 68a), qui sont conçues pour transmettre une force d'entraînement, en particulier provenant d'au moins une unité d'entraînement (44a), afin de déplacer les au moins deux mâchoires de scellage (18a, 20a) l'une par rapport à l'autre dans une direction parallèle à l'axe de déplacement horizontal (38a), dans lequel, de chaque côté des au moins deux mâchoires de scellage (18a, 20a), l'une des deux douilles linéaires résistantes au couple (62a, 68a) est disposée, au moins vu dans la direction parallèle à l'axe de déplacement horizontal (38) de l'unité de guidage (82a).

6. Dispositif de scellage transversal (14a à 14l) selon l'une des revendications précédentes, **caractérisé en ce que** l'unité de guidage (82a) comprend au moins un élément de guidage (64a, 74a), en particulier une tige de guidage, dans lequel l'unité de déplacement (36a) comprend au moins une douille linéaire résistante au couple (62a, 68a), qui peut se déplacer le long de l'au moins un élément de guidage (64a, 74a) de l'unité de guidage (82a) pour un déplacement vertical des au moins deux mâchoires de scellage (18a, 20a).

7. Dispositif de scellage transversal (14a à 14g) selon l'une des revendications précédentes, **caractérisé par** un cadre (70a à 70g) et au moins une unité d'entraînement (42a à 42g) destinée à fournir une force d'entraînement afin de générer un déplacement vertical des au moins deux mâchoires de scellage (18a à 18g, 20a à 20g) par rapport au cadre (70a à 70g), dans lequel l'unité d'entraînement (42a à 42g) destinée à fournir la force d'entraînement afin de générer le déplacement vertical des au moins deux mâchoires de scellage (18a à 18g, 20a à 20g) est disposée de manière au moins sensiblement fixe en position par rapport au cadre (70a à 70g), dans lequel l'unité d'entraînement (42a à 42g) est libre de tout déplacement par rapport au cadre (70a à 70g) autre qu'un déplacement de composants mécaniques de l'unité d'entraînement (42a à 42g) qui se déplacent inévitablement pendant le fonctionnement de l'unité d'entraînement (42a à 42g).

8. Dispositif de scellage transversal (14a à 14e) selon l'une des revendications précédentes, **caractérisé par** un cadre (70a à 70e) et au moins une unité d'entraînement (44a à 44e) destinée à entraîner l'unité de déplacement (36a à 36e) de manière à générer un déplacement horizontal des au moins deux mâchoires de scellage (18a à 18e, 20a à 20e) l'une par rapport à l'autre dans une direction parallèle à l'axe de déplacement horizontal (38a à 38e) au moyen de l'unité de déplacement (36a à 36e), dans lequel l'unité d'entraînement (44a à 44e) destinée entraîner l'unité de déplacement (36a à 36e) afin de générer le déplacement horizontal des au moins deux mâchoires de scellage (18a à 18e, 20a à 20e) est disposée de manière au moins sensiblement fixe en position par rapport au cadre (70a à 70e), dans lequel l'unité d'entraînement (42a à 42g) est libre de tout déplacement par rapport au cadre (70a à 70g) autre qu'un déplacement de composants mécaniques de l'unité d'entraînement (42a à 42g) qui se déplacent inévitablement pendant le fonctionnement de l'unité d'entraînement (42a à 42g).

9. Procédé de fonctionnement d'un dispositif de scellage transversal (14a à 14l) destiné à sceller un emballage ou un matériau d'emballage, en particulier un dispositif de scellage transversal (14a à 14l) selon l'une des revendications précédentes, **caractérisé en ce que,** dans une étape de processus (72a à 72g), deux mâchoires de scellage (18a à 18g) du dispositif de scellage transversal (14a à 14g) sont tirées dans une position de scellage au moyen d'une unité de déplacement (36a à 36g) du dispositif de scellage transversal (14a à 14g), dans lequel l'unité de déplacement (36a à 36g) est reliée aux au moins deux mâchoires de scellage (18a à 18g, 20a à 20g) de telle sorte que l'unité de déplacement (36a à 36g) génère une force de traction directe qui tire les au moins deux mâchoires de scellage (18a à 18g, 20a à 20g) l'une par rapport à l'autre dans la position de scellage, dans lequel les au moins deux mâchoires de scellage (18a à 18g, 20a à 20g) se déplacent linéairement le long d'une direction parallèle à un axe de déplacement horizontal (38a à 38g) d'une unité de guidage (82a à 82g) du dispositif de scellage transversal (14a à 14g), dans lequel au moins un élément de déplacement (46a à 46g) et au moins un autre élément de déplacement (48a à 48g) de l'unité de déplacement (36a à 36g) se déplacent l'un par rapport à l'autre afin de tirer les au moins deux mâchoires de scellage (18a à 18g, 20a à 20g) l'une vers l'autre dans la position de scellage.

10. Procédé selon la revendication 9, **caractérisé en ce que,** dans une étape de processus (72a), un couple d'entraînement destiné à déplacer les au moins deux mâchoires de scellage (18a, 20a) l'une par rapport à l'autre le long d'un axe de déplacement horizontal (38a) d'une unité de guidage (82a) du dispositif de scellage transversal (14a) est transmis par au moins une douille linéaire résistante au couple (62a) de l'unité de déplacement (36a).

11. Machine verticale de formage, de remplissage et de scellage (10a à 10l) comprenant un bâti de machine (12a à 121) et au moins un dispositif de scellage transversal (14a à 14l) destiné à sceller un matériau d'emballage transversalement selon l'une des revendications 1 à 8.
